# EUROPÄISCHE PATENTSCHRIFT

(11) **EP 4 177 808 B1**
(45) Veröffentlichungstag und Bekanntmachung des Hinweises auf die Patenterteilung: **04.09.2024**
(21) Anmeldenummer: 22204852.2
(22) Anmeldetag: 01.11.2022
(51) Int. Cl.: G06Q 20/06, G06Q 20/02, G06Q 20/36, G06Q 20/38

(54) **SELEKTIV ANONYMISIERENDE ÜBERWEISUNG EINER KRYPTOWÄHRUNG**
SELECTIVELY ANONYMIZING CRYPTOCURRENCY TRANSACTION
TRANSFERT DE CRYPTOMONNAIE À ANONYMISATION SÉLECTIVE

(30) Priorität: 09.11.2021 DE 102021129047
(43) Veröffentlichungstag der Anmeldung: 10.05.2023
(73) Patentinhaber: Bundesdruckerei GmbH, 10969 Berlin (DE)
(72) Erfinder: RÜCKRIEMEN, Jörg, verstorben (DE)
(74) Vertreter: Richardt Patentanwälte PartG mbB

(56) Entgegenhaltungen:
- WO-A1-2017/182601
- CN-A- 112 348 677
- US-A1- 2018 349 896
- US-A1- 2019 213 584
- JOSEPH BONNEAU ET AL: "Mixcoin Anonymity for Bitcoin with accountable mixes (Full version)", FINANCIAL CRYPTOGRAPHY AND DATA SECURITY, 18TH INTERNATIONAL CONFERENCE, FC 2014, CHRIST CHURCH, BARBADOS, MARCH 3-7, 2014, REVISED SELECTED PAPERS, 1 January 2014 (2014-01-01), pages 486 - 504, XP055496192
- WANG QI ET AL: "Anonymity for Bitcoin From Secure Escrow Address", IEEE ACCESS, vol. 6, 19 March 2018 (2018-03-19), pages 12336 - 12341, XP011679758, DOI: 10.1109/ACCESS.2017.2787563
- WANG DAN ET AL: "A Survey on Privacy Protection of Blockchain: The Technology and Application", IEEE ACCESS, IEEE, USA, vol. 8, 12 May 2020 (2020-05-12), pages 108766 - 108781, XP011794603, DOI: 10.1109/ACCESS.2020.2994294
- LIU YI ET AL: "An efficient method to enhance Bitcoin wallet security", 2017 11TH IEEE INTERNATIONAL CONFERENCE ON ANTI-COUNTERFEITING, SECURITY, AND IDENTIFICATION (ASID), IEEE, 27 October 2017 (2017-10-27), pages 26 - 29, XP033316048, DOI: 10.1109/ICASID.2017.8285737
- "Mastering bitcoin : [unlocking digital cryptocurrencies]", 20 December 2014, O'REILLY MEDIA, Beijing Cambridge Farnham Köln Sebastopol Tokyo, ISBN: 978-1-4493-7404-4, article ANDREAS M. ANTONOPOULOS: "Mastering Bitcoin - Unlocking Digital Cryptocurrencies", XP055306939

## Beschreibung

Die Erfindung betrifft ein elektronisches Bezahlverfahren für eine selektiv anonymisierende Überweisung eines Betrags einer Kryptowährung sowie einen Server und ein System zum Ausführen des entsprechenden Bezahlverfahrens.

Im Zuge der zunehmenden Digitalisierung rücken heutzutage mehr und mehr bargeldlose Zahlungsinstrumente in den Vordergrund, insbesondere basierend auf elektronischen Verfahren zur Zahlungsabwicklung. Im bargeldlosen Zahlungsverkehr erfolgt ein Transfer von Zahlungsmitteln, ohne dass dabei Bargeld transferiert wird. Bei Barzahlungen wird Bargeld, d.h. Banknoten oder Münzen, zwischen Zahlungspflichtigem und Zahlungsempfänger ausgetauscht während es bei einer bargeldlosen Zahlung nicht zu einem solchen Austausch von Bargeld kommt. Barzahlungen haben beispielsweise den Vorteil, dass sie anonym erfolgen können. Bei bargeldlose Zahlungsverfahren ist dies im Allgemeinen nicht der Fall. Selbst bei Zahlungen mittels einer Kryptowährung, wie etwa Bitcoin, ist anhand der Blockchain öffentlich einsichtig, welcher Betrag von welcher Adresse an welche Zieladresse transferiert wurde und sich somit Zahlungen rekonstruieren lassen.

Bargeldlose Zahlungsverfahren haben gegenüber Bargeld beispielsweise den Vorteil, dass sie eine effiziente Zahlungsabwicklung ermöglichen, selbst wenn sich Zahlungspflichtiger und Zahlungsempfänger an entfernten Orten aufhalten, wie es beispielsweise bei Einkäufen über das Internet der Fall ist. Zudem erlauben es bargeldlose Zahlungsverfahren effiziente Mechanismen zur Verhinderung von Geldwäsche zu implementieren, aber eben auf kosten der Anonymität.

Die US 2018/349896 A1 beschreibt ein Verfahren zur Anonymisierung einer Blockchain-Transaktion, welches umfasst: Speichern eines Schlüsselpaars, das einen privaten Schlüssel und einen öffentlichen Schlüssel umfasst; Empfangen einer Anonymisierungsanforderung von einem Computer, wobei die Anforderung eine Zieladresse und einen Transaktionsbetrag enthält; Übertragen einer Zwischenadresse auf der Grundlage des öffentlichen Schlüssels an den Computer; Empfangen eines Blocks in einer Blockchain, wobei der eine Block aus einem Blockkopf und einem oder mehreren Transaktionsdatenwerten besteht, die einen spezifischen Transaktionsdatenwert enthalten, der aus der Zwischenadresse und einem Übertragungsbetrag auf der Grundlage des Transaktionsbetrags besteht; Erzeugen einer digitalen Signatur unter Verwendung des privaten Schlüssels; und Übertragen eines neuen Transaktionsdatenwertes und der digitalen Signatur an einen mit der Blockchain verbundenen Knoten, wobei der neue Transaktionsdatenwert aus der Zieladresse und einem auf den Transaktionsbetrag bezogenen Zahlungsbetrag besteht.

Der Erfindung liegt die Aufgabe zugrunde, ein verbessertes elektronisches Bezahlverfahren zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein elektronisches Bezahlverfahren für eine selektiv anonymisierende Überweisung eines ersten Betrags einer Kryptowährung von einer Ausgangsadresse an eine erste Zieladresse unter Verwendung eines ersten Servers und einer Blockchain. Ein oder mehrere Adressen sind als Zwischenadressen für ein Ausführen von Transaktionen, welche ein Anonymitätskriterium verletzen, zugelassen.

Das durch den ersten Server ausgeführte Bezahlverfahren umfasst:
- Empfangen einer unter Verwendung eines Wallet-Programms erstellten Transaktionsaufforderung, wobei die Transaktionsaufforderung die erste Zieladresse und eine signierte erste Transaktionsanweisung für eine erste Transaktion des ersten zu überweisenden Betrags von der Ausgangsadresse an eine erste Zwischenadresse des ersten Servers umfasst,
   wobei die erste Transaktionsanweisung mit einem der Ausgangsadresse zugeordneten ersten privaten kryptographischen Schlüssel eines ersten asymmetrischen Schlüsselpaars des Wallet-Programms signiert ist,
   wobei der erste Server einen der ersten Zwischenadresse zugeordneten ersten privaten kryptographischen Schlüssel eines ersten asymmetrischen Schlüsselpaars des ersten Servers umfasst,
   wobei zumindest die erste Zieladresse mit einem zweiten öffentlichen kryptographischen Schlüssel eines zweiten asymmetrischen Schlüsselpaars des ersten Servers verschlüsselt ist,
- Prüfen, ob die Transaktionsaufforderung mit der ersten Transaktion das Anonymitätskriterium erfüllt,
- falls die Transaktionsaufforderung das Anonymitätskriterium erfüllt, Initiieren eines Eintragens der signierten ersten Transaktionsanweisung in die Blockchain,
   Initiieren einer anonymisierenden zweiten Transaktion des ersten Betrags von der ersten Zwischenadresse an die erste Zieladresse unter Verwendung der Blockchain,
- falls die Transaktionsaufforderung das Anonymitätskriterium verletzt, Prüfen ob eine erste Registrierung für das Wallet-Programm auf dem ersten Server vorliegt,
   falls eine erste Registrierung vorliegt, Zuordnen der Überweisung von der Ausgangsadresse an die erste Zieladresse zu einer von der ersten Registrierung umfassten ersten Identität, welche auf dem ersten Server hinterlegt ist,
   unter der Voraussetzung, dass die erste Zwischenadresse für ein Ausführen von Transaktionen zugelassen ist, die das Anonymitätskriterium verletzen, Initiieren des Eintragens der signierten ersten Transaktionsanweisung in die Blockchain und Initiieren einer dritten Transaktion des ersten Betrags von der ersten Zwischenadresse an die erste Zieladresse unter Verwendung der Blockchain.

Ausführungsformen können den Vorteil haben, dass ein blockchainbasiertes elektronisches Bezahlverfahren zur Verfügung gestellt wird, welches sowohl vollständig anonymisierende Überweisungen von Beträgen einer Kryptowährung ermöglicht, als auch ein selektives Aufheben der entsprechenden Anonymitäten, falls die entsprechenden Überweisungen ein oder mehrere für eine vollständig anonyme Zahlungsabwicklung notwendige Anonymitätskriterien nicht erfüllen. In der Blockchain werden keine personenbezogenen Daten gespeichert bzw. keine Daten zur Identität von Zahler und Zahlungsempfänger. Dennoch könnten anhand von Zahlungsbeträgen Rückschlüsse auf Zahler und Zahlungsempfänger gezogen werden, falls die Transaktion direkt von einer Ausgangsadresse des Zahlers auf eine Zieladresse des Zahlungsempfänger erfolgt und in der Blockchain protokolliert werden. Auch wenn den Adressen keine personenbezogenen Daten zugeordnet sind, könnten etwa Rückschlüsse auf bekannte Geschäftsabwicklungen anhand der Zahlungsbeträge und/oder Zahlungszeitpunkte gezogen werden. Mithilfe der Anonymisierung können Transaktionsdaten, z.B. von welcher ursprünglichen Ausgangsadresse welcher Betrag an welche finale Zieladresse überwiesen wird, vor unberechtigten Zugriffen Dritter geschützt werden. Unberechtigte Dritte werden zudem daran gehindert beispielsweise anhand entsprechender Transaktionsdaten Rückschlüsse auf die an der Transaktion beteiligten Parteien, etwa Zahler und Zahlungsempfänger, und/oder auf die Verwendung der Zahlungsbeträge zu ziehen. Somit kann die Datensicherheit von Transaktionsdaten für Transaktionen sichergestellt werden, welche unter Verwendung einer Blockchain ausgeführt und infolgedessen in der Blockchain protokolliert werden.

Da im vorliegenden Fall die Zahlung über einen Server, welcher eine Zwischenadresse bereitstellt, erfolgt, wird ein solche direkte Verbindung zwischen Ausgangsadresse des Zahlers und Zieladresse des Zahlungsempfänger unterbrochen. Mithin wird durch Ausführen der Überweisung über ein oder mehrere Zwischenadressen die Anonymität der Zahlung erhöht. Die Transaktion des zu überweisenden Betrags von der Zwischenadresse an die Zieladresse kann zum Schutze der Anonymität weiter anonymisiert werden, indem zusätzliche Maßnahmen zur zusätzlichen Erhöhung der Anonymität ergriffen werden. Solche Maßnahmen können beispielsweise ein Auflösen zeitlicher und/oder betragsbasierter Korrelationen der Transaktionen bzw. der transaktionsbezogenen Einträge in der Blockchain und der vorzunehmenden Überweisung umfassen. Beispielsweise kann der zu überweisende Betrag auf eine Mehrzahl von Teilbeträgen aufgeteilt werden und/oder das Transferieren der entsprechenden Teilbeträge an die Zieladresse kann zeitlich versetzt erfolgen. Somit kann anhand der in der Blockchain gespeicherten Transaktionsdaten, beispielsweise nicht mehr nachvollzogen werden, welche Einzelbeträge von welcher Ausgangsadresse an welche Zieladresse transferiert wurden. Hierzu werden ein oder mehrerer kryptographisch gesicherte Zwischenadressen und die diesen Adressen zugeordneten kryptographischen Mittel, z.B. asymmetrischen Schlüsselpaare, verwendet. Dabei werden die privaten kryptographischen Schlüssel dieser Zwischenadressen auf unabhängigen, eigenständigen Speichern, insbesondere in geschützten Speicherbereichen, gesichert. Die entsprechenden Speicher sind beispielsweise Speicher unabhängiger, eigenständiger Computersysteme. Somit werden für die Sicherung der Transaktionsdaten beispielsweise ein oder mehrere unabhängige, eigenständige Computersysteme, etwa Server, verwendet.

Andererseits kann der zur Überweisungsabwicklung und beispielsweise Anonymisierung verwendete Server zusätzlich zu einer Aufhebung der Anonymität genutzt werden. Diese Aufhebung erfolgt beispielsweise nur lokal und/oder zeitlich beschränkt auf dem Server, welcher eine Adresse als Zwischenadresse zur Abwicklung der Überweisung bereitstellt. Die Blockchain mit ihren Einträgen ist davon nicht betroffen, d.h. die Einträge in der Blockchain bleiben anonym hinsichtlich von Zahler und Zahlungsempfänger der durch den Server abgewickelten Überweisung. Eine entsprechende Aufhebung der Anonymität erfolgt beispielsweise selektiv in Abhängigkeit davon, ob ein oder mehrere für das ununterbrochenen beibehalten der Anonymität notwendigen Anonymitätskriterien erfüllt sind. Falls diese erfüllt sind, wird die Anonymität nicht unterbrochen, falls eines oder mehrere dieser Anonymitätskriterien verletzt sind, wird die Anonymität durch den Server selektiv für die verletzende Überweisung aufgehoben.

Somit lassen in einem an sich anonymen Zahlungssystem beispielsweise lokal auf dem Server Legitimationsprüfungen ausführen, etwa im Kontext von "Know your customer" (KYC), d.h. "kenne deinen Kunden". Beispielsweise sind auf dem Server oder für den Server zugänglich personenbezogene Daten zur Identität von Teilnehmern an dem Zahlungssystem gespeichert. Die entsprechenden Identitäten sind beispielsweise jeweils einem Wallet-Programmen bzw. einem kryptographischen Schlüsseln des entsprechenden Wallet-Programms zugeordnet. Bei den entsprechenden kryptographischen Schlüsseln kann es sich beispielsweise um kryptographische Schlüssel handeln, welche allein für einen potentiellen Identitätsnachweis bzw. eine selektive Aufhebung der Anonymität verwendet werden. Beispielsweise kann es sich bei diesen kryptographischen Schlüsseln um Schlüssel handeln, welche Adressen zugeordnet sind und zur Zahlungsabwicklung verwendet werden. In diesem Fall sind die Identitäten somit zudem Adressen zugeordnet.

Ausführungsformen ermöglichen es ein Bezahlsystem unter Verwendung einer Kryptowährung bereitzustellen, welches einerseits einen mit Bargeld vergleichbaren anonymen Zahlungsverkehr ermöglicht und andererseits durch eine selektive Aufhebung der entsprechenden Anonymität eine Kontrolle des Zahlungsverkehrs unter fest definierten Voraussetzungen ermöglicht. Dabei bleibt die Überweisung selbst bei einer Aufhebung der Anonymität für Dritte, selbst mit Zugang zu der Blockchain, anonym. Lediglich ein Server, etwa ein Server einer Geschäftsbank, bei welchem die Ausgangs- und/oder Zieladresse registriert ist, wird in die Lage versetzt die Überweisung einer oder mehreren Identitäten zuzuordnen und etwa eine Geldwäscheprüfung durchzuführen.

Eine Transaktionsabwicklung erfolgt unter Verwendung eines dafür konfigurierten Servers. Dem entsprechenden Server sind beispielsweise ein oder mehrere Zwischenadressen zur Abwicklung von Überweisungen bzw. zur Anonymisierung entsprechender Überweisungen zugeordnet. Bei diesen Adressen handelt es sich um Adressen, welche als Zwischenadressen für ein Ausführen von Transaktionen, die ein Anonymitätskriterium verletzen, zugelassen sind. Beispielsweise handelt es sich bei dem Server um einen Server einer Geschäftsbank. Der entsprechende Server empfängt zunächst eine Transaktionsaufforderung, welche unter Verwendung eines Wallet-Programms von einem Nutzer erstellt und, etwa über ein Netzwerk, an den Server gesendet wurde. Bei dem entsprechenden Wallet-Programm kann es sich beispielsweise um ein auf dem Nutzer-Computersystem, insbesondere einem mobilen tragbaren Kommunikationsgerät, wie etwa ein Smartphone, eines Nutzers installiertes Wallet-Programm handeln. Die entsprechende Transaktionsaufforderung wird von dem Nutzer auf dem Nutzer-Computersystem erzeugt und an den Server zur Abwicklung gesendet. Der Server prüft zunächst, ob die Transaktionsaufforderung ein vordefiniertes Anonymitätskriterium für eine vollständige anonyme Überweisung erfüllt. Falls die entsprechende Transaktionsaufforderung das Anonymitätskriterium erfüllt, wird die Überweisung vollständig anonym abgewickelt. Falls die Transaktionsaufforderung das Anonymitätskriterium nicht erfüllen sollte, hebt der Server die Anonymität der Überweisung bzw. der an der Überweisung beteiligten Parteien, d.h. des Senders der Zahlung und/oder des Empfängers der Zahlung, auf. Diese Aufhebung erfolgt beispielsweise ausschließlich lokal auf dem entsprechenden Server. In der Blockchain finden anschließend keine personenbezogenen Daten, d.h. für Dritte bleibt die Anonymität selbst bei vollem Zugriff auf die in der Blockchain gespeicherten Transaktionsdaten anonym. Sollte das selektive Aufheben der Anonymität durch den Server misslingen, so wird die Überweisung beispielsweise zurückgewiesen. Sollte die Aufhebung gelingen und beispielsweise der Ausgangsadresse eine auf dem Server Registrierte Identität zugeordnet werden können, so wird die Überweisung nach Feststellen der Identitäten durch den Server initiiert bzw. ausgeführt. Die entsprechende Zuordnung zu der Identität wird von dem Server für Prüfzwecke genutzt, etwa zu Zwecken einer Geldwäscheprüfung, und in diesem Zuge unabhängig von der Blockchain beispielsweise auf dem Server gespeichert.

Die Transaktionsaufforderung umfasst beispielsweise eine Zieladresse für die Überweisung sowie eine signierte erste Transaktionsanweisung für eine Transaktion des Überweisungsbetrags von der Ausgangsadresse des Zahlungssenders an eine erste, dem Server zugeordnete Zwischenadresse. Die Transaktion erfolgt somit zunächst an den Server bzw. ein von dem Server verwaltete Zwischenadresse, wobei der Server als eine Vermittlungsstelle agiert. Bei dem Server handelt es sich beispielsweise um den Server einer Geschäftsbank. Die Zieladresse ist zur Wahrung der Anonymität beispielsweise mit einem öffentlichen kryptografischen Schlüssel des Servers verschlüsselt. Somit kann lediglich der Server, der über den zugehörigen privaten kryptographischen Schlüssel zur Entschlüsselung verfügt, die Zieladresse der Überweisung ermitteln, während diese vor unberechtigten Zugriffen von Dritten effektiv geschützt ist.

Falls die Transaktionsaufforderung das Anonymitätskriterium erfüllt, initiiert der Server ein Eintragen der signierten ersten Transaktionsanweisung in die Blockchain. Damit erfolgt eine Transaktion des zu überweisenden Betrags der Kryptowährung von der Ausgangsadresse an die Zwischenadresse des Servers. Im Ergebnis verfügt damit der Server über den überweisenden Betrag und unternimmt es, eine anonyme Überweisung des entsprechenden Betrags von der ersten Zwischenadresse an die Zieladresse zu initiieren. Hierzu wird der zu überweisende Betrag von dem Server beispielsweise in eine Mehrzahl von Teilbeträgen aufgeteilt, die Anzahl und Größe der entsprechenden Teilbeträge wird beispielsweise zufallsbasiert gewählt. Der Server sammelt mehrere zu überweisende Beträge unterschiedlicher Überweisungen, welche jeweils in Teilbeträge zerteilt werden. Die einzelnen Teilbeträge werden von der Zwischenadresse in zufälliger gewählter Reihenfolge zeitversetzt an ihre jeweiligen Zieladressen überwiesen. Hierzu erstellt der Server entsprechende Transaktionsanweisungen zur Transaktion der entsprechenden Teilbeträge von der ersten Zwischenadresse an die jeweilige Zieladresse. Die Eintragung erfolgt dabei in einer zufällig gewählten Reihenfolge. Anhand der Blockchain ist somit zwar ersichtlich, dass Transaktionen von unterschiedlichen Ausgangsadressen an die erste Zwischenadresse der Server ausgeführt wurden und dass Transaktionen von Teilbeträgen von der Zwischenadresse an Zieladressen ausgeführt wurden. Es ist aber nicht möglich, zuzuordnen, welche Teilbeträge auf welche Beträge von welcher Ausgangsadresse zurückzuführen sind, falls mehrere Beträge von unterschiedlichen Ausgangsadressen an ein und dieselbe Zieladresse überwiesen werden. Somit kann eine vollständige Anonymisierung der Zahlungen implementiert werden. Unter einer entsprechenden vollständigen Anonymisierung der Transaktionen wird hier verstanden, dass anhand der in der Blockchain gespeicherten Transaktionsdaten nicht nachvollziehbar ist, von welcher Ausgangsadresse an welche Zieladresse welche Beträge in Zuge welcher Überweisungen überwiesen wurden.

Wenn das Anonymitätskriterium nicht erfüllt ist, wird geprüft, ob das Wallet-Programm, unter dessen Verwendung die Transaktionsaufforderung erstellt worden ist, auf dem Server registriert ist. Eine entsprechende Registrierung umfasst beispielsweise eine Identität bzw. personenbezogene Daten, welche auf dem Server hinterlegt und einem öffentlichen kryptografischen Schlüssel zugeordnet sind. Bei dem entsprechenden öffentlichen kryptografischen Schlüssel kann es sich beispielsweise um einen dem Wallet-Programm zugeordneten kryptografischen Schlüssel, welcher auf dem Server hinterlegt ist, handeln. Das Wallet-Programm verfügt über einen dem entsprechenden öffentlichen kryptografischen Schlüssel zugeordneten privaten kryptografischen Schlüssel zum Nachweis der Registrierung bzw. zur Authentifizierung gegenüber dem Server. Beispielsweise erfolgt der entsprechende Nachweis durch Ausführen eines Challenge-Response-Verfahrens zwischen Wallet-Programm und dem Server, durch eine Signatur der Transaktionsaufforderungen mit dem entsprechenden privaten kryptografischen Schlüssel als Signaturschlüssel, falls der entsprechende private kryptografischen Schlüssel dem Wallet-Programm zugeordnet ist, oder durch eine Signatur der Transaktionsanweisung mit dem entsprechenden privaten kryptografischen Schlüssel als Signaturschlüssel, falls der entsprechende private kryptografischen Schlüssel der Ausgangsadresse zugeordnet ist. Somit kann eine der Ausgangsadresse bzw. den zugehörigen kryptographischen Schlüsseln zugeordnete Identität ermittelt werden. Ferner kann, falls für die Zieladresse ebenfalls eine Identität auf dem Server hinterlegt ist, die entsprechende für die Zieladresse hinterlegte Identität ebenfalls der Überweisung zugeordnet werden. Die entsprechenden zugeordneten Identitäten werden beispielsweise zusammen mit den Daten der Überweisung, wie etwa Ausgangsadresse, Zieladresse, zu übertragender Betrag und/oder Verwendungszweck, in einer von der Blockchain unabhängigen Datenbank des Servers gespeichert. Somit wird der Server bzw. eine den Server verwaltende Instanz dazu in die Lage versetzt, entsprechende Überweisungen, welche nicht das Anonymitätskriterium erfüllen, zu kontrollieren. Insbesondere können so auch Korrelationen zwischen mehreren Überweisungen ermittelt werden. In der Blockchain werden so hingegen keine personen- bzw. identitätsbezogene Daten gespeichert.

Falls das Wallet-Programm nicht registriert ist, wird die Überweisung beispielsweise zurückgewiesen. Andernfalls erfolgt die entsprechende Zuordnung der Überweisung zu einer Identität und es wird ein Eintragen der signierten ersten Transaktionsanweisung in die Blockchain initiiert. Mit dem Eintragen der signierten ersten Transaktionsanweisung geht der zu überweisende Betrag von der Zieladresse auf die Zwischenadresse über bzw. wird dieser zugeordnet. Mithin liegt die Verfügungsgewalt über den entsprechenden Betrag nunmehr bei dem Server, welcher eine weitere Transaktion des Betrags von der ersten Zwischenadresse an die Zieladresse unter Verwendung der Blockchain initiiert. Eine entsprechende Transaktion kann beispielsweise durch Erstellen einer zweiten, von dem Server signierten Transaktionsanweisung über den Betrag von der ersten Zwischenadresse an die vorgesehene Zieladresse erfolgen. Alternativerweise kann eine entsprechende Überweisung durch einen Eintrag einer dritten Transaktionsanweisung für eine Transaktion des entsprechenden Betrags von der ersten Zwischenadresse an eine zweite Zwischenadresse erfolgen, welche einem zweiten Server zugeordnet ist. Zusätzlich wird von dem ersten Server beispielsweise eine Transaktionsanfrage erstellt und an den zweiten Server gesendet. Die entsprechende Transaktionsanfrage fragt von dem zweiten Server einen Transaktionsbetrag von der zweiten Zwischenadresse an die Zieladresse an. Die Transaktionsanfrage ist beispielsweise mit einem öffentlichen kryptografischen Schlüssel des zweiten Servers verschlüsselt, sodass die Informationen hinsichtlich der Zieladresse vor unberechtigten Zugriffen Dritter geschützt wird und die Anonymität der Überweisung erhalten bleibt. Der entsprechende zweite Server kann sodann eine Registrierungsprüfung für die Zieladresse durchführen und prüfen, ob eine der Zieladresse zugeordnete Identität auf den zweiten Server gespeichert ist. Falls dies der Fall ist, kann der zweite Server die entsprechende Identität der Zieladresse der Überweisung zuordnen. Beispielsweise umfasst die Transaktionsanfrage an den zweiten Server zusätzlich die Identität der Ausgangsadresse. Nach Ausführungsformen umfassen die Transaktionsanfrage an den zweiten Server die Identität der Ausgangsadresse nicht. Nach Ausführungsformen sendet der zweite Server in Antwort auf die Transaktionsanfrage auf eine Eintragung der Transaktion an die Zieladresse eine Transaktionsbestätigung an den ersten Server. Nach Ausführungsformen umfasst die Transaktionsbestätigung beispielsweise die Identität der Zieladresse. Beispielsweise erfolgt die Kommunikation zwischen dem ersten und dem zweiten Server über eine verschlüsselte Kommunikationsverbindung. Beispielsweise ist die Kommunikationsverbindung unter Verwendung einer Ende-zu-Ende-Verschlüsselung verschlüsselt.

Die Registrierung bzw. die von der Registrierung umfasste Identität kein beispielsweise ein oder mehrere der folgenden Informationen umfassen: Im Falle natürlicher Personen personenbezogene werden Daten umfasst, welche eine eindeutige Identifizierung der entsprechenden natürlichen Peron ermöglichen, wie etwa Name, Nachname, Anschrift, Geburtsdatum, Geburtsort etc. Ferner können Daten zur Art der Berufstätigkeit und/oder zu Zwecken von Geschäftsbeziehungen erfasst sein. Bei politisch exponierten Personen können beispielsweise ferner Funktion und/oder Ausübungsort der entsprechenden Funktion hinterlegt werden. Bei juristischen Personen können beispielsweise neben Daten zum Firmennamen und zur Anschrift, ebenso beispielsweise Daten zur Art der Gesellschaft, zur Tätigkeit, zur Branche, zum Branchencode, zur Anzahl der Mitarbeiter, zu Besitzverhältnisse, zur Firmenstruktur und/oder Finanzkennziffern erfasst werden. Ebenso können im Falle einer Zusammenstellung von KYC-Daten die an der Erstellung mitwirkenden Personen und/oder bei Änderungen an KYC-Daten mitwirkende Personen protokolliert werden.

Bei der Kryptowährung kann es sich beispielsweise um ein digitales Zentralbankgeld, d.h., ein sogenannte Central Bank Digital Currency (CBDC) handeln. In diesem Fall stellt die Kryptowährung eine offizielle digitale Währung, wie etwa ein digitaler Euro, welche von einer Zentralbank, wie etwa der Europäischen Zentralbank herausgegeben wird. Das entsprechende elektronisches Geld liegt beispielsweise direkt auf Konten bei der Zentralbank. Diese CBDC-Konten bei der Zentralbank sind in Form von Adressen in einer von der Zentralbank verwalteten Blockchain organisiert. Digitales Zentralbankgeld unterliegt der Geldpolitik der Zentralbank und kann je nach Ausgestaltung auch offizielles bzw. gesetzliches Zahlungsmittel sein.

Ausführungsformen können den Vorteil haben, eine Kryptowährung, insbesondere eine offizielle Währung wie etwa ein digitaler Euro, zu implementieren, welche sowohl Anonymitätseigenschaften vergleichbar mit Bargeldaufweist zugleich aber auch Antigeldwäscheanforderungen erfüllen kann. Es werden dabei sowohl ein effektives Verfahren zur kryptographisch gesicherten Anonymisierung der Überweisungen implementiert, als auch ein kryptographisch abgesichertes Verfahren zum selektiven Aufheben der Anonymität zu Prüfzweck, falls Anonymitätskriterien für eine vollständige Anonymisierung der gesamten Überweisung nicht erfüllt sind. Bei der entsprechenden Aufhebung der Anonymität handelt es sich um eine lokale Aufhebung, sodass beispielsweise lediglich der aufhebende Server Zugriff auf Identitätsinformationen erhält, während die entsprechenden Informationen zugleich gegen Zugriffe Dritter geschützt werden. Für Dritte, selbst falls diese Dritten Zugriff auf die Blockchain besitzen, ist die Überweisung beispielsweise nach wie vor anonym. Somit kann es nach Ausführungsformen möglich sein, den Wiederspruch zwischen Sicherung einer Anonymität und der Notwendigkeit von Kenntnissen bezüglich der Identität von Zahlungsteilnehmern zu lösen.

Zur Lösung der entsprechenden widersprüchlichen Anforderungen wird ein Konzept basierend auf einer Blockchain verwendet. Das entsprechende Konzept kann beispielsweise um Smart Contracts erweitert werden, welche Eintragungen in die Blockchain regeln. Mittels der Smart Contracts kann beispielsweise sichergestellt werden, dass Transaktionen, welche gegen ein Anonymitätskriterium verstoßen nur in die Blockchain eingetragen und damit ausgeführt werden können, falls diese eine Adressen umfassen, welche für ein Ausführen von Transaktionen, die ein Anonymitätskriterium verletzen, zugelassen ist. Beispielsweise kann die entsprechende zugelassene Adresse als Zieladresse oder als Ausgangsadresse der einzutragenden Transaktion dienen. Bei der entsprechenden Adresse handelt es sich beispielsweise insbesondere um eine Zwischenadresse der Überweisung. Die entsprechenden zugelassenen Adressen sind beispielsweise jeweils einem Server, insbesondere einem registrierten Server zugeordnet, welcher zu einer selektiven Aufhebung der Anonymität konfiguriert ist. Die Registrierung der Server erfolgt beispielsweise durch eine Registrierung der entsprechenden Adressen in einer Positivliste bzw. Whitelist. Somit kann sichergestellt werden, dass Überweisungen, welche ein Anonymitätskriterium verletzen oder welche eine ein Anonymitätskriterium verletzende Transaktion umfassen, ausschließlich unter Verwendung einer entsprechenden zugelassenen Adresse und damit unter Einbindung eines Servers erfolgen, welcher zu einer selektiven Aufhebung der Anonymität konfiguriert ist. Falls ein Anonymitätskriterium verletzt wird, kann die Anonymität der entsprechenden Transaktion Aufgehoben werden.

Unter einem Smart Contract wird ein Computerprotokoll bzw. ein ausführbares Programm verstanden, welches zum Eintragen von Einträgen, z.B. Transaktionsdaten, in eine Blockchain auszuführen sind und automatisch prüfen, ob die Voraussetzungen für ein Eintragen erfüllt sind. Hierbei kann insbesondere geprüft werden, ob im Falle einer Verletzung eines Anonymitätskriteriums eine dafür zugelassene Adresse involviert ist. Ferner können mittels des Smart Contracts beispielsweise Einträge, etwa Transaktionen, in der Blockchain audiert werden, d.h. auf ihre Validität geprüft werden. Der Smart Contract stellt somit automatisch überprüfbare Regeln über diese Transaktionen bereit. Beispielsweise könne unter Verwendung des Smart Contracts alle Transaktionen in der Blockchain von einem, mehreren oder allen Knoten, d.h. Blockchain-Servern, eines Blockchain-Netzwerks geprüft werden.

Zentralbanken, wie etwa die Europäische Zentralbank, können definierte Mengen der Kryptowährung, wie etwa eines digitalen Euros, herausgeben und behalten ihre währungspolitischen Aufgaben und Funktionen beispielsweise bei. Auch Geschäftsbanken, welche beispielsweise Zwischenadressen zum Ausführen von Überweisungen, welche in Anonymitätskriterium verletzen, bereitstellen, behalten ihre Rollen beispielsweise ebenfalls bei.

Den Nutzern werden beispielsweise bargeldähnliche Funktionen für anonyme Überweisungen bereitgestellt, während selektive Geldwäscheprüfungen bei Überweisungen von und zu Adressen ermöglicht werden, welche bei den Geschäftsbanken mittels personalisierter Wallet-Programme, registriert sind. Die von den Registrierungen umfassten Personendaten der registrierten Identitäten liegen beispielsweise nur auf den Servern der jeweiligen walletführenden Banken. Insbesondere sind die Personendaten beispielsweise unabhängig von der Blockchain gespeichert. Die Blockchain umfasst mithin beispielsweise keinerlei personenbezogene Daten. Die Blockchain enthält die Adressen und Transaktionen der ausgeführten Überweisungen, aber keine persönlichen Daten der an den Überweisungen beteiligten natürlichen oder juristischen Personen.

Beispielsweise können größere Geldbeträge nur unter Einbeziehung einer Bank gesendet und/oder empfangen werden. Insbesondere können Geldwäsche relevante Transaktionen beispielsweise nur unter Einbeziehung einer Bank erfolgen. Durch Verwendung einer Adresse einer Bank als Zwischenadresse für eine Überweisung kann eine Anonymisierung erfolgen und/oder ein Anonymisierungsgrad erhöht werden. Beispielsweise haben nur Banken bzw. Bankenserver direkten Zugriff auf die Blockchain. In diesem Fall erfolgt ein Eintragen von Transaktionen in die Blockchain beispielsweise ausschließlich durch oder über die Bankenserver. Ferner kann beispielsweise ein Auslesen eines Kontostands, d.h. die Summe der einer Adresse zugeordneten Beträge der Kryptowährung, nur über die Banken bzw. Bankenserver erfolgen.

Beispielsweise handelt es sich bei dem Anonymitätskriterium um einen zulässigen Höchstbetrag, bis zu welchem Transaktionen ohne Identitätsprüfung anonymisiert ausgeführt werden dürfen. Überweisungen können beispielsweise bis zu einem bestimmten Betrag, etwa 500€, 1.000€, 5.000€, 10.000€, 15.000€ oder 20.000€, anonym getätigt werden wie im Falle von Bargeld. Für größere Überweisungen benötigt man beispielsweise ein personalisiertes Wallet bzw. ein personalisiertes Wallet-Programm. Bei einem personalisierten Wallet-Programm handelt es sich um ein Wallet-Programm, welches auf einem Server registriert ist, dem eine Adressen zugeordnet ist, die als Zwischenadressen für ein Ausführen von Transaktionen, welche ein Anonymitätskriterium verletzen, zugelassen ist. Die Registrierung umfasst beispielsweise einen dem Wallet-Programm zugeordneten öffentlichen kryptographischen Schlüssel oder einen öffentlichen kryptographischen Schlüssel eines von dem Wallet-Programm verwalteten privaten kryptographischen Schlüssel. Beispielsweise umfasst die Registrierung ferner eine auf dem Server hinterlegt Identität, welche zur Identifizierung eines Nutzers des Wallet-Programms verwendet werden kann. Die entsprechende Registrierung wird beispielsweise im Zuge eines KYC-Prozesses erstellt. Beispielsweise handelt es sich bei dem Server um den Server einer Bank. Beispielsweise führt die Bank die Registrierung, etwa inklusive eines KYC-Prozesses durch.

Unter Verwendung eines personalisierten Wallet-Programms kann beispielsweise eine beliebige Geldmenge von einer dem entsprechenden Wallet-Programm zugeordneten Adresse als Ausgangsadresse an eine einem anderen personalisierten Wallet-Programm zugeordneten Adresse als Zieladresse gesendet werden. Der Vorgang ist für die Banken, die den KYC-Prozess durchgeführt haben, sichtbar. Mit anderen Worten erfolgt die Überweisung notwendiger Weise über entsprechende Server von Banken, bei welchen die Wallet-Programme registriert sind. Auf diesen Servern sind die den Wallet-Programmen bzw. die den von den Wallet-Programmen genutzten Adressen zugeordnete Identitäten gespeichert. Mithin sind diese Server zu einem selektiven Aufheben der Anonymität in der Lage und können entsprechende Überweisungen beispielsweise einer Geldwäscheprüfung unterziehen.

Hierzu erfolgt eine entsprechende Überweisung beispielsweise in zwei Schritten. Zunächst erfolgt eine Transaktion des zu überweisenden Betrags von einer Ausgangsadresse, deren zugehöriger privater kryptographischer Schlüssel von einem personalisierten Kundenwallet verwaltet wird, an eine Zwischenadresse, welche von einer Bank bzw. einem Bankenserver verwaltet wird. Die Zwischenadresse der Bank ist für ein Ausführen von Transaktionen, welche ein Anonymitätskriterium verletzen, zugelassen. Beispielsweise wird die entsprechende Zwischenadresse bzw. ein ihr zugeordneter privater kryptographischer Schlüssel von einem auf dem Bankenserver installierte Wallet-Programm verwaltet, d.h. einer Banken-Wallet. Hierzu wird eine Transaktionsaufforderung mit einer Zieladresse eines Zahlungsempfängers, an welchen der zu überweisende Betrag von der Zwischenadresse weiter zu transferieren ist, als Parameter an den Bankenserver übertragen. Die Zieladresse ist zum Schutz der Anonymität der Transaktionen mit einem öffentlichen Schlüssel der Bank oder des Bankaccounts in Form der Zwischenadresse verschlüsselt. Die Bank prüft beispielsweise, ob die Zieladresse ebenfalls einem personalisierten Wallet zugeordnet ist und initiiert dann beispielsweise eine Transaktion des Betrags an die Zieladresse. Beispielsweise kann ein die Zieladresse verwaltendes Wallet-Programm ebenfalls auf dem Bankenserver registriert sein. In diesem Fall kann der Bankenserver die Personalisierung des entsprechenden Wallets selbst prüfen und, im Falle einer erfolgreichen Prüfung, beispielsweise eine direkte Transaktion von der Zwischenadresse an die Zieladresse des geprüften Wallets initiieren. Alternativer Weise kann die Transaktionsaufforderung zusätzlich zur Zieladresse eine Zwischenadresse eines weiteren Bankenservers umfassen, bei welchem das die Zieladresse verwaltend Wallet-Programm registriert ist. In diesem Fall kann der Bankenserver beispielsweise eine Transaktion von seiner Zwischenadresse an die Zwischenadresse des weiteren Bankenservers initiieren, damit der Bankenserver die Personalisierung des Wallets der Zieladresse prüft und den zu überweisenden Betrag an die Zieladresse weiterleitet.

Von einem personalisierten Wallet kann beispielsweise auch auf ein anonymes, d.h. ein nicht registriertes Wallet-Programm überwiesen werden. Beispielsweise setzt eine solche Überweisung voraus, dass ein Anonymitätskriterium, wie etwa ein maximales Limit des zu überweisenden Betrages, nicht verletzt wird.

Ausführungsformen ermöglichen es beispielsweise ein Verfahren für eine Kryptowährung, wie etwa einen digitalen Euro, als Ergänzung zu einer bestehenden bargeldbasierten Währung, wie etwa dem Eurosystem, unter Führung einer Zentralbank. Banken kommt beispielsweise die Aufgabe zum Bereitstellen von Adressen zu, die als Zwischenadressen für ein Ausführen von Transaktionen, welche ein Anonymitätskriterium verletzen, zugelassen sind. Dabei kann beispielsweise eine Anonymität von Überweisungen für Beträge bis zu einem vordefinierten Limit sichergestellt werden. Die entsprechende Anonymität gilt beispielsweise auch gegenüber den entsprechenden Geschäftsbanken. Nutzerseitig stellen Wallet-Programme, welche Adressen zugeordnete private kryptographische Schlüssel verwalten, Kernelemente zum initiieren bzw. anweisen von Überweisungen dar. Die Wallet-Programme bzw. von diesen verwaltete öffentliche kryptographische Schlüssel können bei den Geschäftsbanken zusammen mit zugehörigen Identitäten der Inhaber der entsprechenden Adressen registriert sein. Die Wallet-Programme sind auf Nutzer-Computersysteme installiert. Bei den entsprechenden Nutzer-Computersystemen kann es sich beispielsweise um mobile tragbare Kommunikationsgeräte handeln, wie etwa ein Smartphone. Für Beträge oberhalb des vordefinierten Limits können durch die Einbindung der Banken und die entsprechenden Registrierungen beispielsweise KYC-Regeln implementiert werden. Nach Ausführungsformen kann beispielsweise auch ein offline Austausch von Beträgen der Kryptowährung ermöglicht werden, indem etwa private kryptographische Schlüssel ausgetauscht werden, welche Adressen zugeordneten sind, an die die entsprechenden Beträge überwiesen wurden, indem die entsprechenden kryptographischen Schlüssel umfassende Wallet-Programme und/oder die entsprechenden Wallet-Programme umfassende mobile tragbare Kommunikationsgeräte ausgetauscht werden. Handelt es sich bei den ausgetauschten kryptographischen Schlüsseln und/oder Wallet-Programme um kryptographische Schlüssel und/oder Wallet-Programme, welche einer registrierten Identität zugeordnet sind, kann eine Aktualisierung der Registrierung bzw. eine Registrierung des Austauschs notwendig sein. Beispielsweise ist für eine Verwendung der entsprechenden kryptographische Schlüssel und/oder der Wallet-Programme jeweils eine Authentifizierung des registrierten Inhabers oder eines registrierten Vertreters des Inhabers, etwa im Falle einer juristischen Person, notwendig. Beispielsweise sind Authentifizierungsdaten hinterlegt, welche jeweils nur durch den Server aktualisiert werden können, bei welchem kryptographische Schlüssel und/oder Wallet-Programme registriert sind.

Die Geldmenge der Kryptowährung wird beispielsweise durch eine Zentralbank an die Geschäftsbanken herausgegeben. Hierzu erfolgen beispielsweise Transaktionen von Adressen der Zentralbank an Adressen der Geschäftsbanken. Überweisungen größerer Beträge erfordern beispielsweise ein Einbinden der Geschäftsbanken sowie eine Verwendung einer bei einer Geschäftsbank registrierten Adresse. Es erfolgt beispielsweise keine Geldschöpfung außerhalb der zuständigen Zentralbank. Die umlaufende Geldmenge kann durch Geschäftsbanken und/oder die Zentralbank anhand der Blockchain nachvollzogen werden.

Bei der Blockchain kann es sich beispielsweise um eine Blockchain handeln, bei welcher eine Geldschöpfung ausschließlich durch die zuständige Zentralbank erfolgt. Alternativer Weise kann eine Geldschöpfung durch Mining durch Banken erfolgen, welche von der Zentralbank dazu autorisiert werden. Von der Zentralbank oder von der Zentralbank autorisiert wird eine definierte Menge an Kryptowährung an die Geschäftsbanken ausgegeben. Diese sind beispielsweise mit den ausgegebenen Beträgen bei der Zentralbank verschuldet.

Die Geschäftsbanken führen beispielsweise jeweils ein oder mehrere Banken-Wallets, welche jeweils ein oder mehrere private kryptographische Schlüssel verwalten, die einer Adresse der entsprechenden Geschäftsbank zugeordnet sind. Bei diesen Adressen handelt es sich beispielsweise um Adressen, welche als Zwischenadressen für ein Ausführen von Transaktionen, die ein Anonymitätskriterium verletzen, zugelassen sind. Diese Banken-Wallets und/oder Adressen sind einer Zentralbank EZB bekannt und werden von dieser auf einer Positivliste bzw. Whitelist geführt. Beispielsweise ist für ein Senden und/oder Empfangen von Beträgen, welche ein vordefiniertes Limit überschreiten ein Verwenden einer Adresse eines Banken-Wallets als Zwischenadresse notwendig

Jeder Nutzer kann beispielsweise eine unbegrenzte Anzahl an anonymen, d.h. nicht registrierten, Wallets bzw. Adressen mit einem jeweils zugehörigen asymmetrischen Schlüsselpaar erzeugen. Von diesen Adressen können die Nutzer beispielsweise Beträge der Kryptowährung an Adressen anderer Nutzer überweisen. Die entsprechenden Beträge werden in die Blockchain eingetragen. Anonyme Einzelüberweisungen können dabei auf ein vordefiniertes Limit begrenzt sein. Ferner können Überweisungen auf oder von nicht registrierten Adressen auf ein vordefiniertes Tageslimit beschränkt sein. Transaktionen die eines der vorgenannten Limits überschreiten, werden von der Blockchain beispielsweise zurückgewiesen.

Entsprechende Überweisungen zwischen nicht registrierten Adressen können beispielsweise über Blockchain-Server und/oder vermittelnde Banken-Server abgewickelt werden. Zur Sicherstellung der Anonymität der entsprechenden Überweisungen kann zunächst eine Transaktion an eine Zwischenadresse eines Banken-Servers erfolgen, welcher als Mixer bzw. Mischer fungiert. Der Mixer sammelt Transaktionen und verteilt sie über mehrere Zwischenschritte auf die jeweiligen Zieladressen, wodurch ihr Ursprung selbst unter Verwendung der in der Blockchain gespeicherten Transaktionsdaten nicht mehr nachvollziehbar wird.

Anonyme Wallets bzw. Adressen können durch Banken registriert, einer Identität zugeordnet und so in personenbezogene Wallets bzw. Adressen umwandeln werden. Dabei durchlaufen die Inhaber der Wallets bzw. Adressen beispielsweise einen KYC-Prozess. Alternativ kann die Geschäftsbank ihren registrierten Kunden ein, beispielsweise leeres, Wallet bereitstellen, welches für deren Identität registriert ist. Die entsprechenden KYC-Daten werden beispielsweise in der jeweiligen Bank gespeichert und nicht in der Blockchain. Eine von dem Wallet verwaltete Adresse entspricht einem Konto für die digitale Währung. Die Kontonummer ist der öffentliche Schlüssel der Adresse und/oder kann aus diesem abgeleitet werden. Öffentliche Schlüssel ist beispielsweise Bestandteil eines von dem Wallet selbst generierten bzw. gewürfelten asymmetrischen Schlüsselpaars, welches ferner einen privaten kryptographischen Schlüssel umfasst. Der entsprechende private kryptographische Schlüssel dient als Signaturschlüssel zum Signieren von Transaktionsanweisungen. Durch die Signatur mit dem privaten kryptographischen Schlüssel wird eine Verfügungsberechtigung zur Verfügung über die dem zugehörigen öffentlichen kryptographischen Schlüssel bzw. der zugehörigen Adresse zugewiesenen Beträge der Kryptowährung nachgewiesen. Die entsprechenden kryptographischen Schlüssel und damit die entsprechenden Adressen werden beispielsweise durch die Nutzer unter Verwendung der Wallets erzeugt und nicht durch die Geschäftsbanken.

Beispielsweise führt eine Geschäftsbank von einer ihr zugeordneten Zwischenadresse Überweisungen nur auf registrierte Adressen aus. Mithin wird durch eine erste Überweisung von einer entsprechenden Zwischenadresse auf eine andere Adresse seitens der Geschäftsbank zugesichert, dass die entsprechende Adresse registriert wurde. Beispielsweise wurden KYC-Daten für die jeweilige Person als Inhaberin der Adresse erfasst und gespeichert hat. Die Adresse wird somit als eine von der entsprechenden Geschäftsbank registrierte Adresse anerkannt. Diese Verbindung kann aus der Blockchain anhand der entsprechenden Transaktionsdaten ausgelesen werden. Personenbezogene Wallets bzw. Adressen können für natürliche oder juristische Personen registriert werden.

Von einer personenbezogenen Adresse kann auf eine anonyme Adresse beispielsweise innerhalb eines vordefinierten Limits überwiesen werden. Nach Überprüfung des Limits erfolgt die Überweisung beispielsweise in zwei Schritten: Ein Transfer des Betrages an eine Zwischenadresse der entsprechenden Geschäftsbank wird ausgeführt, bei welcher die personenbezogene Adresse registriert ist. Die Zieladresse und ggf. der Verwendungszweck werden mit dem öffentlichen Schlüssel der Geschäftsbank verschlüsselt und zusammen mit der entsprechenden Transaktionsanweisung von einem Nutzer-Computersystem an einen Server der Geschäftsbank übertragen. Die Geschäftsbank entschlüsselt mit ihrem privaten Schlüssel die Transaktionsdaten und überweist den Betrag von ihrer Zwischenadresse weiter an die Zieladresse. Damit sind in der Blockchain beispielsweise zwei unabhängige Transaktionen eingetragen.

Bei einem Transfer zwischen zwei personenbezogenen Adressen, erfolgt nach einer Überprüfung, dass die Zieladresse eine personenbezogene Adresse ist, der Transfer beispielsweise wie zuvor beschrieben in zwei Schritten: Ein Transfer des Betrages an eine Zwischenadresse der entsprechenden Geschäftsbank wird ausgeführt, bei welcher die personenbezogene Adresse registriert ist. Die Zieladresse und ggf. der Verwendungszweck werden mit dem öffentlichen Schlüssel der Geschäftsbank verschlüsselt und zusammen mit der entsprechenden Transaktionsanweisung von einem Nutzer-Computersystem an einen Server der Geschäftsbank übertragen. Die Geschäftsbank entschlüsselt mit ihrem privaten Schlüssel die Transaktionsdaten und überweist den Betrag von ihrer Zwischenadresse weiter an die Zieladresse. Damit sind in der Blockchain beispielsweise zwei unabhängige Transaktionen eingetragen.

Eine Geschäftsbank kann einem Kunden beispielsweise einen Kredit in der Kryptowährung, etwa einem digitalen Euro, gewähren. Sicherheiten und Zinssätze werden vereinbart und der Kreditbetrag von einer Adresse der Geschäftsbank an eine Adresse des Kunden transferiert. Für die Geschäftsbank reduziert sich damit das von der Zentralbank bezogene Volumen der Kryptowährung. Bei der ratenweisen Zurückzahlung des Kredits an die Adresse der Geschäftsbank wird das Volumen sukzessive wieder aufgefüllt.

Da größere Beträge nur über Server der Geschäftsbanken bzw. von diesen verwalteten Adressen gesendet werden, die als Zwischenadressen für ein Ausführen von Transaktionen, welche ein Anonymitätskriterium verletzen, zugelassen sind, wird eine Überwachung von Geldwäsche durch die Geschäftsbanken implementiert.

Physische Wallets bzw. physische Speichergeräte, welche eine entsprechende Wallet umfassen bzw. private kryptographische Schlüssel von Adresse, können offline übergeben werden. Der Betrag der Kryptowährung befindet sich dabei nicht auf in dem physischen Wallet bzw. auf dem physischen Speichergerät, sondern im Blockchain-Account bzw. eine Blockchain-Adresse auf die ein öffentlicher kryptographischer Schlüssel verweist und deren Nutzungs- bzw. Zugriffsberechtigung der zugehörige private kryptographische Schlüssel nachweist. Ein entsprechendes physisches Speichergerät kann beispielsweise als Chip- und/oder Speicherkarte, NFC-Tag oder anderes HSM-Modul konfiguriert sein. Es umfasst beispielsweise einen gewürfelten privaten kryptographischen Schlüssel der grundsätzlich nicht herausgegeben wird. Mit diesem privaten kryptographischen Schlüssel können Transaktionen signiert werden. Entsprechende kryptographische Schlüssel, insbesondere privaten kryptographischen Schlüssel, können beispielsweise auch als Ausdruck übergeben werden. Damit wird dann Nutzungs- bzw. Zugriffsberechtigung auf die entsprechende Adresse und der ihr zugewiesenen Beträge der Kryptowährung gewährt.

Unter einer "Blockchain" wird hier und im Folgenden eine geordnete Datenstruktur verstanden, welche eine Mehrzahl von miteinander verketteten Datenblöcken umfasst. Insbesondere wird unter einer Blockchain eine geordnete Datenstruktur verstanden, bei welcher jeder der Blöcke (außer dem ersten Block) einen Prüfwert, beispielsweise einen Hash-Wert, seines Vorgängerblocks umfasst und somit anhand jedes Blocks die Gültigkeit aller seiner Vorgängerblocks geprüft und ggf. bestätigt werden kann. Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchain wurde beispielsweise im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die darin beschriebene Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Zusätzliche Blöcke der Blockchain werden beispielsweise in einem rechenintensiven Prozess erzeugt, der auch als sogenanntes Mining bezeichnet wird. Diese zusätzlich erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Hashwerten, des vorangehenden Blocks im jeweils nachfolgenden Block ein hohes Maß an Sicherheit gegenüber nachträglichen Manipulationen bietet. Das Verketten der Blöcke kann dann unter Verwendung dieser Root-Hashwerte überprüft werden. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner Einträge praktisch ausgeschlossen ist, da hierfür die Hashwerte aller nachfolgenden Blöcke in kurzer Zeit ebenfalls neu berechnet werden müssten.

Eine Blockchain kann beispielsweise auch in Form einer Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für weitere Teilnehmer, welche der ausgewählten Gruppe hinzugefügt werden sollen, ein öffentlicher Schlüssel in der Blockchain in einem Initialisierungseintrag hinterlegt werden. Anhand dieser öffentlichen Schlüssel kann geprüft werden, ob Signaturen von Blöcken und damit die entsprechenden Blöcke selbst gültig sind. Öffentliche Schlüssel ursprünglicher Teilnehmer der ausgewählten Gruppe können beispielsweise in einem Genesisblock der Blockchain hinterlegt sein.

Bei der vorliegenden von einer der Zentralbank verwalteten Blockchain handelt es sich beispielsweise um eine öffentliche Blockchain, welche auf Blockchain-Servern der Zentralbank verwaltet wird. Beispielsweise erfolgt ein Eintragen neuer Blöcke ausschließlich durch diese von der Zentralbank verwalteten Blockchain-Server. In diesem Fall können beispielsweise rechenintensiven Prozess bei Hinzufügen zusätzlicher Blöcke entfallen. Beispielsweise ist für ein Hinzufügen zusätzlicher Blöcke lediglich eine Signatur mit einem der Zentralbank zugeordneten Signaturschlüssel notwendig.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer bzw. Blockchain-Server eine eindeutige Liste anderer Teilnehmer, welchen er als Gruppe vertraut. Jeder Teilnehmer kann zusätzliche Einträge vorschlagen, die in einen zusätzlichen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen zusätzlichen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtigt, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%, 90%, 95% oder 100%. Alle vorgeschlagenen Einträge, die dieses Kriterium erfüllen, werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Unter einer "Kommunikationsschnittstelle" wird hier beispielsweise eine Schnittstelle verstanden, über die Daten empfangen und gesendet werden können, wobei die Kommunikationsschnittstelle kontaktbehaftet oder kontaktlos konfiguriert sein kann.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" wird hier insbesondere ein nichtflüchtiger Speicher verstanden. Unter einem "nichtflüchtigen Speicher" wird hier beispielsweise ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor der elektronischen Gesundheitskarte möglich ist. Nach Ausführungsformen ist der Zugriff von dem bzw. über den mit dem Speicher gekoppelten Prozessor nur dann möglich, wenn eine hierzu erforderliche Bedingung erfüllt ist. Hierbei kann es sich zum Beispiel um eine kryptographische Bedingung, insbesondere eine erfolgreiche Authentisierung und/oder eine erfolgreiche Berechtigungsprüfung, handeln. Eine solche Prüfung kann beispielsweise auf einer elektronischen Signatur mit einem Signaturschlüssel beruhen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln und digitale mit dem privaten Schlüssel erstellte Signaturen zu prüfen. Ein privater Schlüssel ermöglicht es seinem Inhaber, mit dem öffentlichen Schlüssel verschlüsselte Daten zu entschlüsseln oder digitale Signaturen zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten ein weiterer Datenwert, welcher als "Signatur" bezeichnet wird, berechnet wird. Bei einer Signatur kann es sich zum Beispiel um eine mit einem privaten kryptographischen Schlüssel verschlüsselten Hashwert der Ausgangsdaten handeln.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTPS) Protokolls.

Ein Challenge-Response-Verfahren beruht beispielsweise auch auf einem asymmetrischen Kryptosystem und kann dem Nachweis eines Besitzes eines privaten und damit geheimen kryptographischen Schlüssels durch die zweite Instanz gegenüber der ersten Instanz dienen. Dabei kennt nur die zweite Instanz den entsprechenden privaten kryptographischen Schlüssel, welchen sie für eine kryptographische Transformation der Challenge, e.g. eines Nonce, verwendet. Bei der entsprechenden kryptographischen Transformation kann es sich beispielsweise um ein digitales Signieren handeln. Eine erste Instanz kann unter Verwendung eines dem privaten kryptographischen Schlüssel zugehörigen öffentlichen kryptographischen Schlüssels anhand der Response prüfen, ob eine zweite Instanz tatsächlich über Kenntnis des privaten kryptographischen Schlüssels verfügt, ohne dass die erste Instanz im Zuge der Prüfung selbst Kenntnis von dem privaten kryptographischen Schlüssel erlangt.

Unter einem "Nutzer-Computersystem" wird hier ein Computersystem verstanden, auf welches der Nutzer Zugriff hat. Hierbei kann es sich zum Beispiel um einen Desktop-Computer (PC), ein Serviceterminal, oder ein mobiles tragbares Kommunikationsgerät, wie etwa ein Laptop, ein Tablet, ein Smartphone oder einen anderen Smart Device handeln.

Nach Ausführungsformen handelt es sich bei dem ersten und zweiten asymmetrischen Schlüsselpaars des ersten Servers um zwei verschiedene asymmetrische Schlüsselpaare.

Nach Ausführungsformen sind das erste und zweite asymmetrische Schlüsselpaar des ersten Servers identisch. Ausführungsformen können den Vorteil haben, dass beispielsweise zum Verschlüsseln der Zieladresse derselbe öffentliche kryptographische Schlüssel verwendet werden kann, welcher auch als Zwischenadresse des Servers dient oder aus welchem die entsprechende Zwischenadresse abgeleitet ist. Aus Kenntnis der Zwischenadresse kann sich somit beispielsweise die Kenntnis des für die Verschlüsselung zu verwendenden kryptographischen Schlüssels ergeben.

Nach Ausführungsformen umfasst die anonymisierende zweite Transaktion:
- Sammeln einer Mehrzahl von anonym an Zieladressen zu überweisenden Beträgen auf der ersten Zwischenadresse,
- Aufteilen der einzelnen zu überweisenden Beträge jeweils in eine Mehrzahl von Teilbeträgen,
- Erstellen einer signierten Transaktionsanweisung für jeden der Teilbeträge, wobei die Transaktionsanweisungen jeweils mit dem ersten privaten kryptographischen Schlüssel des ersten asymmetrischen Schlüsselpaars des ersten Servers signiert sind, wobei Transaktionsanweisungen jeweils eine Transaktion des jeweiligen Teilbetrags von der ersten Zwischenadresse an die für den entsprechenden Teilbetrag vorgesehene Zieladresse umfassen,
- zeitversetztes Initiieren eines Eintragens der einzelnen signierten Transaktionsanweisungen in die Blockchain in einer durchmischten Reihenfolge.

Ausführungsformen können den Vorteil haben, dass der Server als eine Art Mischer zum Aufteilen und Durchmischung von Transaktionen dient. Durch das Sammeln von zu überweisenden Beträgen unterschiedlicher Überweisungen, deren Aufteilen in Teilbeträge sowie das zeitversetzte Eintragen der Transaktionen der Teilbeträge in durchmischter Reihenfolge in die Blockchain können zeitliche und/oder betragsbasierte Korrelationen der Transaktionen aufgelöst bzw. verschleiert werden, sodass nicht mehr zugeordnet werden kann, welche Beträge von welcher Ausgangsadresse an welche Zieladresse überwiesen wurden.

Nach Ausführungsformen wird die Anzahl der Teilbeträge, in welche die Beträge jeweils aufgeteilt werden, zufallsbasiert gewählt.

Ausführungsformen können den Vorteil haben, dass durch eine zufallsbasierte Auswahl der Anzahl der Teilbeträge nicht oder nur äußerst schwer zu rekonstruieren ist, welche Teilbeträge zu welchem Ausgangsbetrag gehören. Eine entsprechende zufallsbasierte Auswahl kann beispielsweise darin bestehen, dass eine zufällige Anzahl an Teilbeträgen bestimmt wird und der aufzuteilende Betrag in dieser Anzahl zerlegt wird. Dabei können die Teilbeträge dieselbe Größe aufweisen oder zufallsbasiert verschiedene Größen.

Nach Ausführungsformen ist die gewählte Anzahl jeweils größer oder gleich einer Mindestanzahl an Teilbeträgen und/oder die gewählte Anzahl ist jeweils größer oder gleich einer Maximalanzahl an Teilbeträgen.

Ausführungsformen können den Vorteil haben, dass sichergestellt werden kann, dass eine Mindestanzahl von Teilbeträgen erstellt wird, d.h. dass ein Mindestmaß an Aufteilung für den zu überweisenden Betrag sichergestellt werden kann. Mithin kann sichergestellt werden, dass die Aufteilung nicht zu grob ist. Eine zu grobe Aufteilung kann den Nachteil haben, dass die Teilbeträge zu groß sind und somit möglicherweise eine zu geringe Aufteilung für ein effektives Verschleiern der Zugehörigkeit der Teilbeträge zu den Ausgangsbeträgen vorliegt. Ferner können Ausführungsformen den Vorteil haben, dass eine maximale Anzahl an Teilbeträgen beschränkt und somit das Ausmaß der Aufteilung nach oben begrenzt wird. Mithin kann sichergestellt werden, dass die Aufteilung nicht zu fein ist. Eine zu feine Aufteilung kann in eine zu große Anzahl an zeitversetzt auszuführenden Transaktionen von Teilbeträgen resultieren, wodurch die Überweisung insgesamt zu lange verzögert werden könnte. Eine Maximalanzahl an Teilbeträgen kann mithin eine effiziente Ausführung der Überweisung sicherstellen.

Nach Ausführungsformen werden die Größen der Teilbeträge, in welche die Beträge jeweils aufgeteilt werden, zufallsbasiert gewählt.

Ausführungsformen können den Vorteil haben, dass durch eine zufallsbasierte Auswahl der Größen der Teilbeträge nicht oder nur äußerst schwer zu rekonstruieren ist, welche Teilbeträge zu welchem Ausgangsbetrag gehören. Eine entsprechende zufallsbasierte Auswahl kann beispielsweise darin bestehen, dass nacheinander zufällige Größen für die Teilbeträge bestimmt werden, bis eine zuletzt bestimmte zufällige Größe eines Teilbetrags größer als ein verbleibender Restbetrag des aufzuteilenden Betrags ist. In diesem Fall wird der entsprechende Restbetrag als letzter zufälliger Teilbetrag verwendet.

Nach Ausführungsformen sind die gewählten Größen jeweils größer oder gleich einer Mindestgröße und/oder die gewählten Größen sind jeweils kleiner oder gleich einer Maximalgröße.

Ausführungsformen können den Vorteil haben, dass die Teilbeträge eine Mindestgröße aufweisen, d.h. nicht zu klein sind und somit möglicher Weise eine zu feine Aufteilung erfolgt. Eine zu feine Aufteilung kann in eine zu große Anzahl an zeitversetzt auszuführenden Transaktionen von Teilbeträgen resultieren, wodurch die Überweisung insgesamt zu lange verzögert werden könnte. Eine Mindestgröße kann mithin eine effiziente Ausführung der Überweisung sicherstellen. Ferner können Ausführungsformen den Vorteil haben, dass die Teilbeträge nicht zu groß sind und somit möglicherweise eine zu geringe Aufteilung für ein effektives Verschleiern der Zugehörigkeit der Teilbeträge zu den Ausgangsbeträgen vermieden werden kann.

Nach Ausführungsformen ist die Mindestgröße und/oder die Maximalgröße jeweils abhängig von dem aufzuteilenden Betrag.

Mithin werden keine Absolutwerte für die Mindestgröße und/oder Maximalgröße festgelegt, sondern diese werden beispielsweise prozentual definiert. Somit kann sichergestellt werden, dass sowohl große als auch kleine Beträge jeweils in eine ausreichende Anzahl von Teilbeträgen zerlegt werden.

Nach Ausführungsformen sind die Mindestgröße und/oder die Maximalgröße in Bezug auf den aufzuteilenden Betrag jeweils prozentual definiert.

Nach Ausführungsformen wird zusätzlich eine absolute Mindestgröße festgelegt. Nach Ausführungsformen wird zusätzlich eine absolute Maximalgröße festgelegt. Somit kann zusätzlich sichergestellt werden, dass die aufgeteilten Beträge sich innerhalb einer vorbestimmten absoluten Betragsspanne befinden. Die betragsabhängige Mindestgröße und/oder Maximalgröße gilt beispielsweise nur, solange die absolute Mindestgröße nicht unterschritten bzw. die absolute Maximalgröße nicht überschritten wird. Im Ergebnis kann sichergestellt werden, dass kleine Beträge nicht zu fein zerlegt werden und große Beträge nicht zu grob zerlegt werden.

Nach Ausführungsformen wird die Größe des Zeitversatzes des Initiierens des Eintragens der einzelnen signierten Transaktionsanweisungen in die Blockchain jeweils zufallsbasiert gewählt.

Ausführungsformen können den Vorteil haben, dass aufgrund des Zeitversatzes aus einer zeitlichen Nähe der Eintragung von Transaktionen in die Blockchain nicht oder nur begrenzt auf eine Zugehörigkeit der entsprechenden Transaktionen zu einer gemeinsamen Überweisung bzw. Ausgangsadresse geschlossen werden kann.

Nach Ausführungsformen ist die gewählte Größe des Zeitversatzes jeweils größer oder gleich einer Mindestgröße und/oder die gewählte Größen des Zeitversatzes ist jeweils kleiner oder gleich einer Maximalgröße. Nach Ausführungsformen sind die gewählten Größen der Zeitversatze jeweils größer oder gleich einer Mindestgröße und/oder die gewählten Größen der Zeitversatze sind jeweils kleiner oder gleich einer Maximalgröße.

Ausführungsformen können den Vorteil haben, dass sichergestellt werden kann, dass ein minimaler und/oder maximaler Zeitversetzung eingehalten wird. Einerseits kann die Zeitdauer bis zum Abschluss aller zu einer gemeinsamen Überweisung gehörender Transaktionen nach oben begrenzt werden, d.h. es dauert nicht zu lange bis eine Überweisung abgeschlossen ist. Andererseits kann sichergestellt werden, dass die einzelnen Transaktionen mit ausreichendem zeitlichem Abstand hintereinander ausgeführt werden.

Nach Ausführungsformen wird die durchmischte Reihenfolge zufallsbasiert gewählt.

Ausführungsformen können den Vorteil haben, dass aus der Reihenfolge der Transaktionen in der Blockchain nicht auf eine gemeinsame Ausgangsadresse geschlossen werden kann.

Nach Ausführungsformen wird die verschlüsselte erste Zieladresse unter Verwendung eines von dem ersten Server umfassten zweiten privaten kryptographischen Schlüssel des zweiten asymmetrischen Schlüsselpaars des ersten Servers entschlüsselt.

Ausführungsformen können den Vorteil haben, dass nur der Server dazu in der Lage ist, mit dem zweiten privaten kryptographischen Schlüssel des zweiten asymmetrischen Schlüsselpaars des ersten Servers die Zieladresse für die Transaktion zu entschlüsseln und diese mitzubestimmen. Dadurch kann die Zieladresse vor unberechtigten Zugriffen effektiv geschützt werden.

Nach Ausführungsformen umfasst die Transaktionsaufforderung einen Verwendungszweck der Überweisung. Der Verwendungszweck ist mit dem zweiten öffentlichen kryptographischen Schlüssel des zweiten asymmetrischen Schlüsselpaars des ersten Servers verschlüsselt. Nach Ausführungsformen wird der verschlüsselte Verwendungszweck beispielsweise zusammen mit der ersten Zieladresse entschlüsselt.

Ausführungsformen können den Vorteil haben, dass der erste Server zusätzlich Informationen über den Verwendungszweck erhält und diese ebenfalls der Überweisung zuordnen kann. Der entsprechende Verwendungszweck findet sich dabei nicht in der Blockchain wieder. Falls er gespeichert wird, wird er beispielsweise wie die Identitätszuordnung in einer von der Blockchain unabhängigen Datenbank auf dem ersten Server gespeichert.

Nach Ausführungsformen ist die gesamte Transaktionsaufforderung mit dem zweiten öffentlichen kryptographischen Schlüssel des zweiten asymmetrischen Schlüsselpaars des ersten Servers verschlüsselt.

Ausführungsformen können den Vorteil haben, dass die Transaktionsaufforderung ausschließlich von dem ersten Server entschlüsselt werden kann und die darin enthaltenen Informationen effektiv vor unberechtigten Zugriffen geschützt sind. Dies gilt insbesondere auch für die Transaktionsanweisung, welche erst nach einer erfolgreichen Prüfung der Transaktionsaufforderung in die Blockchain eingetragen und somit für andere, zumindest andere Server der Blockchain, sichtbar wird.

Nach Ausführungsformen handelt es sich bei dem Anonymitätskriterium um ein betragsabhängiges Kriterium.

Ausführungsformen können den Vorteil haben, dass Überweisungen bis zu einem bestimmten vordefinierten Betrag anonym erfolgen können, während größere Beträge nicht anonym erfolgen können. So kann es sich bei dem entsprechenden Betrag um einen Betrag einer Einzelüberweisung handeln. Beispielsweise handelt es sich bei dem entsprechenden Betrag um die Summe der Beträge mehrerer Überweisungen, welche von derselben Ausgangsadresse erfolgt sind. Beispielsweise wird zur Prüfung des entsprechenden summarischen Betrags in der Blockchain kontrolliert, wie viele Überweisungen von einer entsprechenden Ausgangsadresse für einen vordefinierten Zeitraum eingetragen sind. Überschreitet die Summe der entsprechenden Beträge einen vordefinierten Maximalwert, so ist das entsprechende Anonymitätskriterium verletzt.

Nach Ausführungsformen legt das Anonymitätskriterium fest, dass der erste zu überweisende Betrag einen vordefinierten ersten Maximalwert nicht überschreitet. Nach Ausführungsformen legt das Anonymitätskriterium fest, dass die innerhalb eines ersten vordefinierten Zeitraums von der Ausgangsadresse der Überweisung gesendeten Beträge einen vordefinierten zweiten Maximalwert nicht überschreiten. Die entsprechenden Beträge können beispielsweise aus der Blockchain gelesen und der zweite Maximalwert unter deren Verwendung berechnet werden.

Nach Ausführungsformen legt das Anonymitätskriterium fest, dass die innerhalb eines zweiten vordefinierten Zeitraums von der ersten Zieladresse der Überweisung empfangenen Beträge einen vordefinierten dritten Maximalwert nicht überschreiten. Die entsprechenden Beträge können beispielsweise aus der Blockchain gelesen und der dritte Maximalwert unter deren Verwendung berechnet werden. Nach Ausführungsformen sind der erste und zweite Zeitraum identisch. Nach Ausführungsformen sind der erste und zweite Zeitraum verschieden. Nach Ausführungsformen sind der zweite und dritte Maximalwert identisch. Nach Ausführungsformen sind der zweite und dritte Maximalwert verschieden.

Nach Ausführungsformen können Transaktionen, welche das Anonymitätskriterium erfüllen, von beliebigen Ausgangsadressen an beliebige Zieladressen ausgeführt werde. Ausführungsformen können den Vorteil haben, dass solche Transaktionen anonym wie Bargeldzahlungen ausgeführt werden können.

Nach Ausführungsformen ist es für Transaktionen, welche das Anonymitätskriterium verletzen, eine notwendige Voraussetzung, dass zumindest bei der jeweiligen Ausgangsadresse oder der jeweiligen Zieladresse um eine Zwischenadresse handelt, welche für Transaktionen die das Anonymitätskriterium verletzen, zugelassen ist. Ausführungsformen können den Vorteil haben, dass durch einbinden einer entsprechenden Zwischenadresse sichergestellt werden kann, dass die entsprechenden Transaktionen über einen Server abgewickelt werden, welcher zur selektiven Aufhebung der Anonymität konfiguriert ist.

Nach Ausführungsformen wird im Falle einer Verletzung eines Anonymitätskriteriums die Transaktionsaufforderung zurückgewiesen, falls keine erste Registrierung für das Wallet-Programm auf dem ersten Server vorliegt. Ausführungsformen können den Vorteil haben, dass sichergestellt werden kann, dass eine Transaktion, welche ein Anonymitätskriterium verletzt, nur ausgeführt wird, falls die Anonymität für diese Transaktion durch den Server lokal aufhebbar ist. Die Anonymität ist nur aufhebbar, falls eine entsprechende Registrierung auf dem entsprechenden Server vorliegt. Somit kann eine effektive Kontrolle entsprechender Transaktionen gewährleitet werden.

Nach Ausführungsformen wird das Eintragen der signierten ersten Transaktionsanweisung in die Blockchain zurückgewiesen, falls die Transaktionsaufforderung das Anonymitätskriterium verletzt und die erste Zwischenadresse nicht zum Ausführen von Transaktionen zugelassen ist, die das Anonymitätskriterium verletzen. Ausführungsformen können den Vorteil haben, dass Transaktionen, welche das Anonymitätskriterium verletzen, ausschließlich über Zwischenadressen abgewickelt werden, welche zugelassen sind zum Ausführen von Transaktionen, die das Anonymitätskriterium verletzen. Eine entsprechende Zulassung ist beispielsweise aus einem Eintrag in eine Positivliste ablesbar. Diese Positivliste wird beispielsweise auf dem Server und/oder auf Blockchain-Servern bereitgestellt.

Nach Ausführungsformen erfolgt mithin auch nicht die dritte Transaktion des ersten Betrags von der ersten Zwischenadresse an die erste Zieladresse.

Nach Ausführungsformen umfasst die Transaktionsaufforderung eine Signatur mit einem zweiten privaten kryptographischen Schlüssel eines zweiten asymmetrischen Schlüsselpaars des Wallet-Programms. Ein zweiter öffentlicher kryptographischer Schlüssel des zweiten asymmetrischen Schlüsselpaars des Wallet-Programms ist für das Wallet-Programm auf dem ersten Server registriert. Die Registrierungsprüfung umfasst eine Prüfung der Signatur der Transaktionsaufforderung unter Verwendung des für das Wallet-Programm registrierten öffentlichen kryptographischen Schlüssels.

Ausführungsformen können den Vorteil haben, dass für das Wallet-Programm ein zusätzlicher öffentlicher kryptographischer Schlüssel verwendet und auf dem Server im Zuge einer Registrierung bereitgestellt wird, um das Wallet-Programm zu authentifizieren. Die Authentifizierung erfolgt in diesem Fall anhand einer Signaturprüfung. Nach Ausführungsformen ist die vollständige Transaktionsaufforderung signiert. Nach Ausführungsformen ist ein die erste Zieladresse umfassender Teil der Transaktionsaufforderung signiert.

Nach Ausführungsformen umfasst die Registrierungsprüfung ein Ausführen eines Challenge-Response-Verfahrens unter Verwendung des für das Wallet-Programm registrierten zweiten öffentlichen kryptographischen Schlüssels. Ausführungsformen können den Vorteil haben, dass eine Authentifizierung des Wallet-Programms im Zuge eines Challenge-Response-Verfahrens erfolgt. Aich in diesem Fall wird auf dem Server im Zuge einer Registrierung ein öffentlicher kryptographischer Schlüssel des Wallet-Programms bereitgestellt. Im Zuge einer Authentifizierung des Wallet-Programms sendet der Server eine Challenge an das Wallet-Programm, etwa eine Zufallszahl, welche das Wallet-Programm mit dem zu dem hinterlegten öffentlichen kryptographischen Schlüssel gehörenden privaten kryptographischen Schlüssel signiert und als Response an den Server zurückschickt. Die Authentifizierung erfolgt in diesem Fall anhand einer Signaturprüfung der Response unter Verwendung des hinterlegten öffentlichen kryptographischen Schlüssels.

Nach Ausführungsformen erfolgt die Übertragung der Transaktionsaufforderung an den ersten Server über eine verschlüsselte, insbesondere über eine ende-zu-endeverschlüsselte Verbindung. Nach Ausführungsformen handelt es sich bei dem ersten und zweiten asymmetrischen Schlüsselpaars des Wallet-Programms um zwei verschiedene asymmetrische Schlüsselpaare handelt.

Nach Ausführungsformen sind das erste und zweite asymmetrische Schlüsselpaar des Wallet-Programms identisch. Ausführungsformen können den Vorteil haben, dass zur Authentifizierung des Wallet-Programms dasselbe asymmetrische Schlüsselpaar verwendet werden kann, welches auch zur Validierung von Transaktionen von der Ausgangsadresse verwendet werden.

Nach Ausführungsformen handelt es sich bei der ersten Registrierung für das Wallet-Programm um eine Registrierung eines ersten öffentlichen kryptographischen Schlüssels des ersten asymmetrischen Schlüsselpaars des Wallet-Programms. Beispielsweise verfügt das Wallet-Programm über den ersten privaten kryptographischen Schlüssel des entsprechenden ersten asymmetrischen Schlüsselpaars.

Nach Ausführungsformen handelt es sich bei der dritten Transaktion um eine anonymisierende Transaktion. Ausführungsformen können den Vorteil haben, dass selbst bei einer selektiven Aufhebung der Anonymität durch den Server, die weiteren Transaktion durch entsprechende Verfahrensschritte zusätzlich anonymisiert wird, um sicherzustellen, dass die Überweisungen für Dritte selbst unter Rückgriff auf die Transaktionsdaten der Blockchain nicht nachvollziehbar sind.

Nach Ausführungsformen umfasst das Initiieren der dritten Transaktion ein Prüfen, ob eine zweite Registrierung für die erste Zieladresse auf dem ersten Server vorliegt. Falls eine zweite Registrierung vorliegt, wird eine von der zweiten Registrierung umfasste zweite Identität, welche auf dem ersten Server hinterlegt ist, zu der Überweisung von der Ausgangsadresse an die erste Zieladresse zugeordnet. Es wird eine mit dem ersten privaten kryptographischen Schlüssel des ersten asymmetrischen Schlüsselpaars des ersten Servers signierte zweite Transaktionsanweisung für eine zweite Transaktion des ersten zu überweisenden Betrags von der ersten Zwischenadresse des ersten Servers an die erste Zieladresse erstellt und ein Eintragen der signierten zweiten Transaktionsanweisung in die Blockchain initiiert.

Ausführungsformen können den Vorteil haben, dass auch für die Zieladresse eine Registrierungsprüfung erfolgen und die Anonymität der zugeordneten Identität selektiv aufgehoben werden kann.

Nach Ausführungsformen handelt es sich bei der bei der dritten Transaktion um eine Transaktion des vollständigen ersten Betrags.

Nach Ausführungsformen handelt es sich bei der dritten Transaktion um eine direkte Transaktion von der ersten Zwischenadresse auf die erste Zieladresse, wobei für eine direkte Transaktion auf eine erste Zieladresse, bei welcher es sich um keine Zwischenadresse handelt, welche für ein Ausführen von Transaktionen, die das Anonymitätskriterium verletzen, zugelassen ist, und falls die direkte Transaktion das Anonymitätskriterium verletzt, eine zweite Registrierung der ersten Zieladresse eine notwendige Voraussetzung für das Ausführen der Transaktion ist.

Nach Ausführungsformen umfasst die Transaktionsaufforderung eine zweite Zwischenadresse eines zweiten Servers. Das Initiieren der dritten Transaktion umfasst ein Prüfen, ob die zweite Zwischenadresse für ein Ausführen von Transaktionen, welche das Anonymitätskriterium verletzen, zugelassen ist, sowie, falls die zweite Zwischenadresse für ein Ausführen von Transaktionen, welche das Anonymitätskriterium verletzen, zugelassen ist, ein Erstellen einer mit dem ersten privaten kryptographischen Schlüssel des ersten asymmetrischen Schlüsselpaars des ersten Servers signierten dritten Transaktionsanweisung für eine dritte Transaktion des ersten zu überweisenden Betrags von der ersten Zwischenadresse des ersten Servers an die zweite Zwischenadresse des zweiten Servers, wobei der zweite Server einen der zweiten Zwischenadresse zugeordneten ersten privaten kryptographischen Schlüssel eines ersten asymmetrischen Schlüsselpaars des zweiten Servers umfasst, ein Initiieren eines Eintragens der signierten dritten Transaktionsanweisung in die Blockchain, ein Erstellen einer ersten Transaktionsanfrage, wobei die erste Transaktionsanfrage eine erste Anfrage zum Weiterleiten des ersten zu überweisenden Betrags an die erste Zieladresse sowie die erste Zieladresse umfasst und die signierte dritte Transaktionsanweisung identifiziert, wobei zumindest die erste Zieladresse mit einem zweiten öffentlichen kryptographischen Schlüssel eines zweiten asymmetrischen Schlüsselpaars des zweiten Servers verschlüsselt ist, und ein Senden der ersten Transaktionsanfrage an den zweiten Server.

Ausführungsformen können den Vorteil haben, dass der zu überweisende Betrag an eine Zwischenadresse eines zweiten Servers weitergeleitet wird, welcher für die Identitätsprüfung der Zieladresse zuständig ist. Beispielsweise handelt es sich bei dem ersten Server um einen Server einer ersten Geschäftsbank, bei welcher die Ausgangsadresse registriert ist während es sich bei dem zweiten Server um einen Server einer zweiten Geschäftsbank nadelt, bei welcher die Zieladresse registriert ist.

Nach Ausführungsformen handelt es sich bei dem ersten und zweiten asymmetrischen Schlüsselpaars des zweiten Servers um zwei verschiedene asymmetrische Schlüsselpaare.

Nach Ausführungsformen sind das erste und zweite asymmetrische Schlüsselpaar des zweiten Servers identisch. Ausführungsformen können den Vorteil haben, dass beispielsweise zum Verschlüsseln der Zieladresse derselbe öffentliche kryptographische Schlüssel verwendet werden kann, welcher auch als Zwischenadresse des zweiten Servers dient oder aus welchem die entsprechende Zwischenadresse abgeleitet ist. Aus Kenntnis der Zwischenadresse kann sich somit beispielsweise die Kenntnis des für die Verschlüsselung zu verwendenden kryptographischen Schlüssels ergeben.

Nach Ausführungsformen umfasst das Verfahren ferner:
- Empfangen einer von einem dritten Server erstellten zweite Transaktionsanfrage, wobei die zweite Transaktionsanfrage eine zweite Anfrage zum Weiterleiten eines zweiten zu überweisenden Betrags von der ersten Zwischenadresse an eine zweite Zieladresse sowie die zweite Zieladresse umfasst und eine signierte vierte Transaktionsanweisung einer Transaktion des zweiten Betrags von einer dritten Zwischenadresse des dritten Servers an die erste Zwischenadresse des ersten Servers identifiziert, wobei zumindest die zweite Zieladresse mit dem ersten öffentlichen kryptographischen Schlüssel eines ersten asymmetrischen Schlüsselpaars des ersten Servers verschlüsselt ist,
   wobei die vierte Transaktionsanweisung mit einem der dritten Zwischenadresse zugeordneten privaten kryptographischen Schlüssel eines asymmetrischen Schlüsselpaars des dritten Servers signiert ist,
- Prüfen, ob die zweite Transaktionsanfrage mit der dritten Transaktion das Anonymitätskriterium erfüllt,
- falls die zweite Transaktionsanfrage das Anonymitätskriterium verletzt, Prüfen ob eine dritte Registrierung der zweiten Zieladresse auf dem ersten Server vorliegt,
   falls eine dritte Registrierung vorliegt, Zuordnen des angefragten Weiterleitens zu einer von der dritten Registrierung umfassten dritten Identität, welche auf dem ersten Server hinterlegt ist,
   Erstellen einer signierten fünften Transaktionsanweisung einer Transaktion des zweiten Betrags von der ersten Zwischenadresse an die zweite Zieladresse, wobei die fünfte Transaktionsanweisung unter Verwendung des ersten privaten kryptographischen Schlüssels des ersten asymmetrischen Schlüsselpaars des ersten Servers signiert ist,
   unter der Voraussetzung, dass die erste Zwischenadresse für ein Ausführen von Transaktionen zugelassen ist, die das Anonymitätskriterium verletzen, Initiieren eines Eintragens der signierten fünften Transaktionsanweisung in die Blockchain.

Ausführungsformen können den Vorteil haben, dass durch den Server eine Identitäts- bzw. Registrierungsprüfung für Überweisungen implementiert wird, deren Zieladresse auf dem Server registriert ist und welche ein Anonymitätskriterium verletzen.

Nach Ausführungsformen handelt es sich bei der zweiten Zieladresse beispielsweise um die erste Ausgangsadresse.

Nach Ausführungsformen wird, falls die zweite Transaktionsanfrage das Anonymitätskriterium erfüllt, die signierte fünfte Transaktionsanweisung der Transaktion des zweiten Betrags von der ersten Zwischenadresse an die zweite Zieladresse erstellt und das Eintragen der signierten fünften Transaktionsanweisung in die Blockchain initiiert. Bei der Transaktion des zweiten Betrags handelt es sich beispielsweise um eine anonymisierende Transaktion.

Nach Ausführungsformen umfasst das Zuordnen ein Speichern der Zuordnung in einer von der Blockchain unabhängigen Datenbank des ersten Servers. Ausführungsformen können den Vorteil haben, dass die entsprechende Zuordnung für Prüfzwecke gespeichert werden kann, ohne dass die darin enthaltenen daten Eingang in die Blockchain finden.

Nach Ausführungsformen handelt es sich bei dem ersten Server um einen Blockchain-Server und das Eintragen der signierten ersten Transaktionsanweisung in die Blockchain wird von dem ersten Server selbst vorgenommen.

Nach Ausführungsformen umfasst das Initiieren des Eintragens der signierten ersten Transaktionsanweisung in die Blockchain ein Weiterleiten der signierten ersten Transaktionsanweisung von dem ersten Server an einen Blockchain-Server zum Eintragen in die Blockchain.

Nach Ausführungsformen ist eine Voraussetzung für ein Eintragen der signierten ersten Transaktionsanweisung durch den Blockchain-Server in die Blockchain, dass die erste Zwischenadresse zugelassen ist für ein Ausführen von Transaktionen, welche ein Anonymitätskriterium verletzen. Ausführungsformen können den Vorteil haben, dass sichergestellt werden kann, dass im Falle einer Verletzung des Anonymitätskriteriums eine dafür zugelassene Zwischenadresse verwendet wird.

Nach Ausführungsformen handelt es sich bei der Blockchain um eine Konsortialblockchain. Beispielsweise handelt es sich bei der Blockchain um eine nicht öffentliche Blockchain. Die Blockchain wird beispielsweise von Geschäftsbanken betrieben und kontrolliert. Eine Konsortialblockchain stellt eine Hybridlösung zwischen der offen, dezentralen Form einer öffentlichen Blockchain und der beschränkten Form einer zentral verwalteten privaten Blockchain. Dabei wird eine Konsortialblockchain in der Regel nicht von einer zentralen Instanz verwaltet, sondern von einem Konsortium. Zugang haben wie bei privaten Blockchains nur zugelassene Teilnehmer, im vorliegenden Fall beispielsweise nur die Geschäftsbanken. Die Flexibilität kann dadurch höher als bei öffentlich zugänglichen Blockchains sein, aber eingeschränkt im Vergleich zu privaten Blockchains. Beispielsweise kann jeder Nutzer über Gateways Transaktionen bzw. Transaktionsaufforderungen an die Blockchain bzw. an Blockchain-Server senden. Die Blockchain-Server werden beispielsweise von den Geschäftsbanken bereitgestellt. Alternativ kann ein Senden von Transaktionen auch nur über Server der Geschäftsbanken an die Blockchain-Server erfolgen. Beispielsweise müssen Transaktionen, welche ein Anonymitätskriterium verletzen, unter Einbeziehung eines Servers einer zuständigen Geschäftsbank abgewickelt werden. Die Transaktionen werden, beispielsweise unter Verwendung von Smart Contracts, überprüft und im Falle einer erfolgreichen Prüfung ausgeführt. Beispielsweise kann jeder Nutzer eigene Kontostände und die Liste seiner Transaktionen abfragen.

Nach Ausführungsformen wird eine Positivliste bereitgestellt wird, welche die als Zwischenadressen für ein Ausführen von Transaktionen, welche das Anonymitätskriterium verletzen, zugelassenen Adressen auflistet. Ausführungsformen können den Vorteil haben, dass anhand der Positivliste, auch als Whitelist bekannt, geprüft werden kann, ob eine Adresse als Zwischenadresse für ein Ausführen von Transaktionen, welche ein Anonymitätskriterium verletzen, zugelassen ist.

Ausführungsformen umfassen ferner einen Server für ein elektronischen Bezahlverfahren für eine selektiv anonymisierende Überweisung eines Betrags einer Kryptowährung von einer Ausgangsadresse an eine Zieladresse unter Verwendung einer Blockchain. Ein oder mehrere Adressen sind als Zwischenadressen für ein Ausführen von Transaktionen, welche ein Anonymitätskriterium verletzen, zugelassen. Der Server umfasst einen Prozessor, einen Speicher mit ausführbaren Programminstruktionen und eine Kommunikationsschnittstelle. Ein Ausführen der Programminstruktionen durch den Prozessor veranlasst den Server dazu das Bezahlverfahren auszuführen.

Das Bezahlverfahren umfasst:
- Empfangen einer unter Verwendung eines Wallet-Programms erstellten Transaktionsaufforderung über ein Netzwerk unter Verwendung der Kommunikationsschnittstelle, wobei die Transaktionsaufforderung die Zieladresse und eine signierte erste Transaktionsanweisung für eine erste Transaktion des zu überweisenden Betrags von der Ausgangsadresse an eine erste Zwischenadresse des Servers umfasst,
   wobei die erste Transaktionsanweisung mit einem der Ausgangsadresse zugeordneten ersten privaten kryptographischen Schlüssel eines ersten asymmetrischen Schlüsselpaars des Wallet-Programms signiert ist,
   wobei in einem geschützten Speicherbereich des Speichers des Servers ein der ersten Zwischenadresse zugeordneter erster privater kryptographischer Schlüssel eines ersten asymmetrischen Schlüsselpaars des Servers gespeichert ist,
   wobei zumindest die Zieladresse mit einem zweiten öffentlichen kryptographischen Schlüssel eines zweiten asymmetrischen Schlüsselpaars des Servers verschlüsselt ist,
- Prüfen, ob die Transaktionsaufforderung mit der ersten Transaktion das Anonymitätskriterium erfüllt,
- falls die Transaktionsaufforderung das Anonymitätskriterium erfüllt, Initiieren eines Eintragens der signierten ersten Transaktionsanweisung in die Blockchain,
   Initiieren einer anonymisierenden zweiten Transaktion des Betrags von der ersten Zwischenadresse an die Zieladresse unter Verwendung der Blockchain,
- falls die Transaktionsaufforderung das Anonymitätskriterium verletzt, Prüfen ob eine erste Registrierung für das Wallet-Programm auf dem Server vorliegt,
   falls eine erste Registrierung vorliegt, Zuordnen der Überweisung von der Ausgangsadresse an die Zieladresse zu einer von der ersten Registrierung umfassten ersten Identität, welche auf dem Server hinterlegt ist,
   unter der Voraussetzung, dass die erste Zwischenadresse für ein Ausführen von Transaktionen zugelassen ist, die das Anonymitätskriterium verletzen, Initiieren des Eintragens der signierten ersten Transaktionsanweisung in die Blockchain und Initiieren einer dritten Transaktion des Betrags von der ersten Zwischenadresse an die Zieladresse unter Verwendung der Blockchain.

Nach Ausführungsformen ist der Server dazu konfiguriert jede der vorangehend beschriebenen Ausführungsformen des elektronischen Bezahlverfahrens auszuführen.

Ausführungsformen umfassen ferner ein System für ein elektronisches Bezahlverfahren für eine selektiv anonymisierende Überweisung eines Betrags einer Kryptowährung von einer Ausgangsadresse an eine Zieladresse unter Verwendung einer Blockchain. Das System umfasst eine Mehrzahl von Servern nach einer der vorangehend beschriebenen Ausführungsformen von Servern für ein entsprechendes elektronisches Bezahlverfahren.

Nach Ausführungsformen ist das System dazu konfiguriert jede der vorangehend beschriebenen Ausführungsformen des elektronischen Bezahlverfahrens auszuführen.

Nach Ausführungsformen umfasst das System ferner ein Nutzercomputersystem. Das Nutzercomputersystem umfasst einen Prozessor, einen Speicher mit ausführbaren Programminstruktionen und eine Kommunikationsschnittstelle. Ein Ausführen der Programminstruktionen durch den Prozessor veranlasst das Nutzercomputersystem dazu die Transaktionsaufforderung zu erstellen und unter Verwendung der Kommunikationsschnittstelle über das Netzwerk an einen der Server des Systems zu senden.

Im Weiteren werden Ausführungsformen der Erfindung mit Bezugnahme auf die Zeichnungen näher erläutert. Es zeigen:
- Figur 1: ein schematisches Diagramm eines exemplarischen Systems,
- Figur 2: ein schematisches Diagramm eines exemplarischen Servers,
- Figur 3: ein Flussdiagramm eines exemplarischen elektronischen Bezahlverfahrens,
- Figur 4: ein Flussdiagramm eines exemplarischen elektronischen Bezahlverfahrens,
- Figur 5: ein Flussdiagramm eines exemplarischen elektronischen Bezahlverfahrens, und
- Figur 6: ein Flussdiagramm eines exemplarischen elektronischen Bezahlverfahrens.

Elemente der nachfolgenden Ausführungsformen, die einander entsprechen, werden mit denselben Bezugszeichen gekennzeichnet.

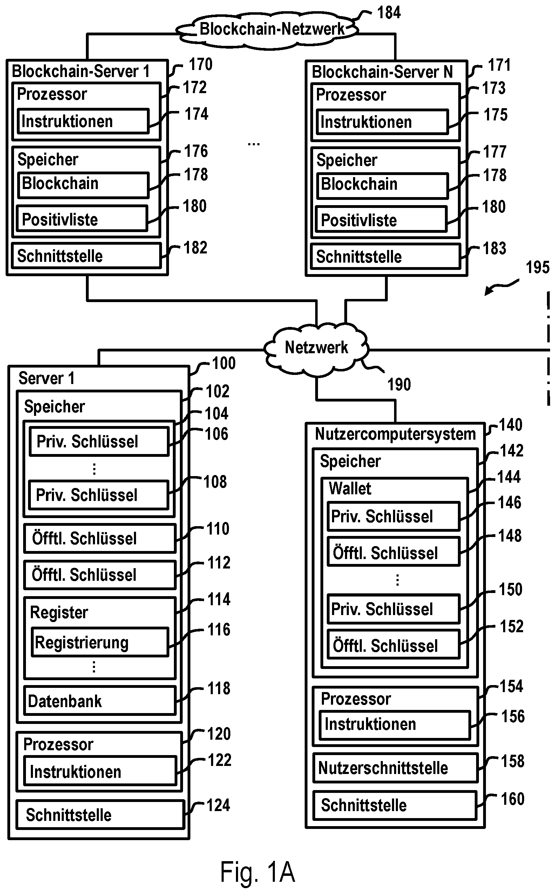

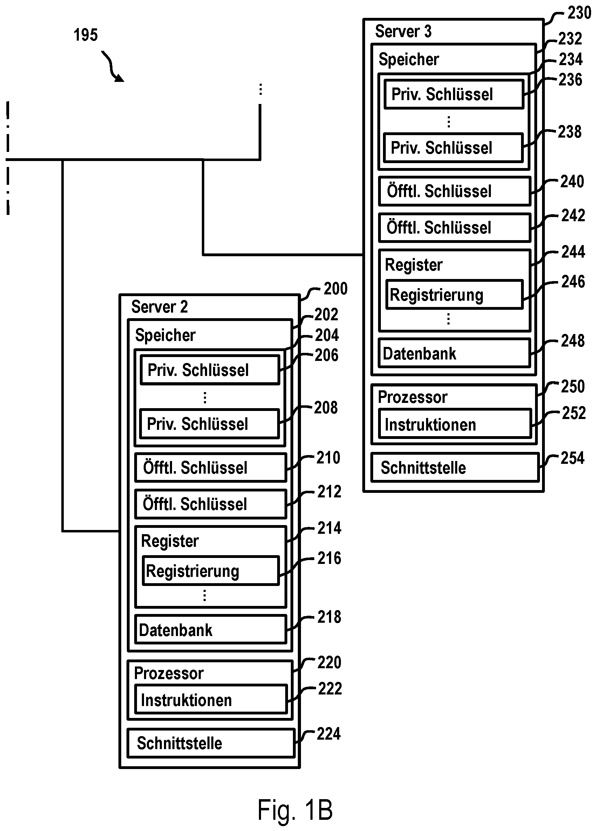

Figur 1 zeigt ein exemplarisches System 195 zum Ausführen eines elektronischen Bezahlverfahrens. Auf einem Nutzer-Computersystem 140 wird unter Verwendung eines Wallet-Programms 144 eine Transaktionsaufforderung für eine Überweisung eines Betrags einer Kryptowährung von einer Ausgangsadresse an eine Zieladresse erstellt. Die Transaktionsaufforderung umfasst die Zieladresse und eine signierte Transaktionsanweisung für eine Transaktion des zu überweisenden Betrags von der Ausgangsadresse an eine Zwischenadresse des Servers 100. Die Transaktionsanweisung ist mit einem der Ausgangsadresse zugeordneten ersten privaten kryptographischen Schlüssel 146 eines ersten asymmetrischen Schlüsselpaars des Wallet-Programms 144 signiert. Diese Signatur weist eine Berechtigung zum Anweisen Transaktion von der entsprechenden Ausgangsadresse nach. Der Server 100 verfügt über einen der Zwischenadresse zugeordneten ersten privaten kryptographischen Schlüssel 106 eines ersten asymmetrischen Schlüsselpaars. Der Server 100 ist mithin in der Lage Transaktionsanweisungen zum Weitertransferieren von Beträgen zu erzeugen, welche der entsprechenden Zwischenadresse zugeordnet wurden. Die Zieladresse ist mit einem zweiten öffentlichen kryptographischen Schlüssel 112 eines zweiten asymmetrischen Schlüsselpaars des Servers verschlüsselt ist, womit allein der Server unter Verwendung eines zweiten privaten kryptographischen Schlüssel 108 des zweiten asymmetrischen Schlüsselpaars des Servers in der Lage ist die Zieladresse zu entschlüsseln. Beispielsweise ist die gesamte Transaktionsaufforderung mit dem zweiten öffentlichen kryptographischen Schlüssel 112 verschlüsselt. Beispielsweise ist nur die Zieladresse mit dem zweiten öffentlichen kryptographischen Schlüssel 112 verschlüsselt. Beispielsweise sind weiter Zusatzinformationen, wie etwa ein Verwendungszweck oder eine zweite Zwischenadresse mit dem zweiten öffentlichen kryptographischen Schlüssel 112 verschlüsselt.

Bei dem Nutzer-Computersystem 140 handelt es sich beispielsweise um ein mobiles tragbares Kommunikationsgerät, wie etwa ein Smartphone. Das Nutzercomputersystem 140 umfasst einen Prozessor 154, einen Speicher 142, eine Nutzerschnittstelle 158 und eine Kommunikationsschnittstelle 160. Die Nutzerschnittstelle 158 umfasst beispielsweise eine Eingabe- und eine Ausgabevorrichtung zur Kommunikation des Nutzers mit Nutzer-Computersystem 140. Die Eingabevorrichtung umfasst beispielsweise eine Tastatur. Die Ausgabevorrichtung umfasst beispielsweise ein Display. Beispielsweise sind Eingabe- und Ausgabevorrichtung in Form eines Touch-Displays miteinander kombiniert. Unter Verwendung der Nutzerschnittstelle 158 kann ein Nutzer ein Erstellen der Transaktionsaufforderung und/oder deren Senden veranlassen. Die Kommunikationsschnittstelle 160 ist dazu konfiguriert über des Netzwerk 190 mit andere Netzwerkkomponenten, wie etwa den Servern 100, 200, 230 zu kommunizieren. Auf dem Nutzercomputersystem 140 ist das Wallet-Programm 144 installiert. Das Wallet-Programm 144 ist beispielsweise in dem Speicher 142 des Nutzercomputersystem 140, insbesondere in einem geschützten Bereich des Speichers 142 gespeichert. Auf den geschützten Bereich des Speichers 142 ist ein Zugriff, das heißt ein Lesezugriff oder ein Schreibzugriff, nur über den Prozessor 154 möglich ist. Nach Ausführungsformen ist ein Zugriff auf den geschützten Bereich des Speichers 142 nur dann möglich, wenn eine hierzu erforderliche Bedingung erfüllt ist. Hierbei kann es sich zum Beispiel um eine kryptographische Bedingung, insbesondere eine erfolgreiche Authentisierung und/oder eine erfolgreiche Berechtigungsprüfung, handeln.

In dem Wallet-Programm 144 sind private kryptographische Schlüssel 146, 150 und beispielsweise zusätzlich zugehörige öffentliche kryptographische Schlüssel 148, 152 gespeichert. Die Schlüssel 146, 148 dienen beispielsweise einer Authentifizierung des Wallet-Programms 144 gegenüber dem Server 100. Andere Schlüssel 150, 152 sind beispielsweise Adressen zugeordnet, welche für Zahlungstransaktionen unter Verwendung der Blockchain 178 genutzt werden können.

Ein Ausführen von Programminstruktionen 156 durch den Prozessor 154 veranlasst das Nutzercomputersystem 140 beispielsweise dazu die Transaktionsaufforderung zu erstellen und unter Verwendung der Kommunikationsschnittstelle 160 über das Netzwerk 190 an den Server 100 des Systems 195 zu senden. Die Transaktionsaufforderung wird auf dem Nutzer-Computersystem 140 erzeugt und über ein Netzwerk 190, beispielsweise das Internet, an den Server 100 gesendet. Dies erfolgt beispielsweise über eine verschlüsselte Kommunikationsverbindung. Die entsprechende Kommunikationsverbindung ist beispielsweise mittels einer Ende-zu-Ende-Verschlüsselung verschlüsselt.

Ferner umfasst das System 195 beispielsweise ein oder mehrere Server 100, 220, 230. Die mehreren Server 100, 220, 230 sind beispielsweise jeweils ähnlich konfiguriert. Bei den Servern 100, 220, 230 handelt es sich beispielsweise um Server von Geschäftsbanken, welche zum Ausführen selektiv anonymisierenden Überweisungen von Beträgen einer Kryptowährung jeweils von einer Ausgangsadresse an eine Zieladresse unter Verwendung der Blockchain 178 konfiguriert sind. Die Server 100, 220, 230 stellen hierzu jeweils Zwischenadressen bereit, welche für ein Ausführen von Transaktionen, die ein Anonymitätskriterium verletzen, zugelassen sind. Die entsprechenden zugelassenen Adressen sind beispielsweise in einer Positivliste registriert, welche auf den Servern 100, 200, 230 und/oder den Blockchain-Servern 170, 171 des Blockchain-Netzwerks 184 vorliegt.

Die Server 100, 200, 230 umfassen jeweils einen Prozessor 120, 220, 250, einen Speicher 102, 202, 232 und eine Kommunikationsschnittstelle 124, 224, 254 zur Kommunikation über das Netzwerk 190. Ein Ausführen von ausführbaren Programminstruktionen 122, 222, 252 durch den jeweiligen Prozessor 120, 220, 250 veranlasst den jeweiligen Server 100, 200, 230 dazu eine selektiv anonymisierende Überweisung für ein elektronischen Bezahlverfahren zu implementieren. Jedem der Server 100, 200, 230 sind beispielsweise ein oder mehrere Adressen zugeordnet, die als Zwischenadressen für ein Ausführen von Transaktionen, welche ein Anonymitätskriterium verletzen, zugelassen sind.

In den Speichern 102, 202, 232 der Server 100, 200, 230 sind jeweils private kryptographische Schlüssel 106, 108, 206, 208, 236, 238 gespeichert sowie zugehörige öffentliche kryptographische Schlüssel 110, 112, 210, 212, 240, 242. Beispielsweise sind die privaten kryptographischen Schlüssel 106, 108, 206, 208, 236, 238 jeweils in einem geschützten Bereich 104, 204, 234 des entsprechenden Speicher 102, 202, 232 gespeichert. Auf die geschützten Bereiche 104, 204, 234 der Speicher 102, 202, 232 ist ein Zugriff, das heißt ein Lesezugriff oder ein Schreibzugriff, beispielsweise nur über den jeweiligen Prozessor 120, 220, 250 möglich ist. Nach Ausführungsformen ist ein Zugriff auf die geschützten Bereiche 104, 204, 234 der Speicher 102, 202, 232 nur dann möglich, wenn eine hierzu erforderliche Bedingung erfüllt ist. Hierbei kann es sich zum Beispiel um eine kryptographische Bedingung, insbesondere eine erfolgreiche Authentisierung und/oder eine erfolgreiche Berechtigungsprüfung, handeln.

Die Schlüssel 106, 110, 206, 210, 236, 240 dienen beispielsweise einem Schutz der Kommunikation mit dem jeweiligen Server 100, 200, 230. Nachrichten an die Server 100, 200, 230 können mit dem öffentlichen kryptographischen Schlüssel 110, 210, 240 des jeweiligen Servers 100, 200, 230 verschlüsselt werden, sodass nur der entsprechende Server 100, 200, 230 die Nachricht mit seinem zugehörigen privaten kryptographischen Schlüssel 106, 206, 236 zu entschlüsseln vermag. Die weiteren Schlüssel 108, 112, 208, 212, 238, 242 sind beispielsweise jeweils Zwischenadressen zugeordnet, welche zur Abwicklung von unter Verwendung der Blockchain 178 genutzt werden können. Bei diesen Zwischenadressen handelt es sich beispielsweise um Zwischenadressen, welche für ein Ausführen von Transaktionen, die ein Anonymitätskriterium verletzen, zugelassen sind.

Ferner umfassen die Server 100, 200, 230 jeweils ein Register 114, 214, 244, welches Registrierungen 116, 216, 246 von Wallet-Programmen 144 bzw. von Adressen, die die Wallet-Programmen 144 verwalten, umfassen. Die Registrierungen 116, 216, 246 umfassen beispielsweise jeweils Identität, welche auf dem jeweiligen Server 100, 200, 230 hinterlegt und dem jeweiligen registrierten Wallet-Programmen 144 bzw. der jeweiligen registrierten Adresse zugeordnet sind.

Ferner ist ein Blockchain-Netzwerk 184 mit einer Mehrzahl von Blockchain-Servern 170, 171 gezeigt, welche jeweils einen Prozessor 172, 173, einen Speicher 176, 177 und eine Kommunikationsschnittstelle 182, 183 zur Kommunikation über das Netzwerk 190 umfassen. Die Blockchain-Server 170, 171 sind beispielsweise Teil eines Blockchain-Netzwerks 184 bzw. bilden Blockchain-Knoten des Blockchain-Netzwerks 184. Die Blockchain-Server 170, 171 und/oder das Blockchain-Netzwerks 184 werden beispielsweise von einer die Kryptowährung ausgebenden Zentralbank verwaltet. Handelt es sich bei der Zentralbank um eine Zentralbank, welcher mehrere Länder angehören, umfasst das Blockchain-Netzwerks 184 beispielsweise ein oder mehrere Blockchain-Server 170, 171 pro Land. Beispielsweise sind die Blockchain-Server 170, 171 und/oder das Blockchain-Netzwerks 184 von einem Zentralbanksystem umfasst.

In den Speichern 176, 177 sind beispielsweise jeweils eine Kopie der Blockchain 178 gespeichert. Ferner sind in den Speichern 176, 177 beispielsweise jeweils Positivlisten 180 mit Adressen gespeichert, welche als Zwischenadressen für ein Ausführen von Transaktionen, welche ein Anonymitätskriterium verletzen, zugelassen sind. Ein Ausführen der Programminstruktionen 174, 175 durch den Prozessor 172, 173 veranlasst den jeweiligen Blockchain-Servern 170, 171 über die Kommunikationsschnittstelle 182, 183 empfangene Transaktionsanweisungen, beispielsweise unter Verwendung der Positivliste 180, auf ihre Validität hin zu prüfen und im Falle einer positiven Prüfung in die Blockchain 178 einzutragen. Die entsprechenden Programminstruktionen 174, 175 werden beispielsweise in Form eines Smart Contracts bereitgestellt.

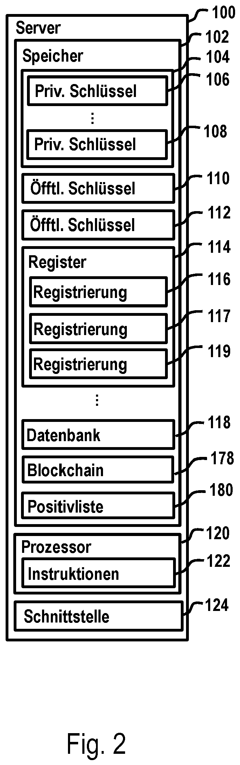

Figur 2 zeigt einen exemplarischen Server 100, welcher dem Server 100 der Figur 1 entspricht, zusätzlich aber auch noch als ein Blockchain-Server konfiguriert ist. Hierzu umfasst der Speicher 102 zusätzlich eine Kopie der Blockchain 178 und eine Positivliste 180 mit Adressen gespeichert, welche als Zwischenadressen für ein Ausführen von Transaktionen, welche ein Anonymitätskriterium verletzen, zugelassen sind. Ferner veranlasst ein Ausführen der Programminstruktionen 122 durch den Prozessor 120 den Server 100 dazu Transaktionsanweisungen, beispielsweise unter Verwendung der Positivliste 180, auf ihre Validität hin zu prüfen und im Falle einer positiven Prüfung in die Blockchain 178 einzutragen. Die entsprechenden Programminstruktionen 122 werden beispielsweise in Form eines Smart Contracts bereitgestellt. Ferner sind in Figur 2 eine Mehrzahl von Registrierungen 116, 117, 119 verschiedener Wallet-Programme bzw. Adressen gespeichert.

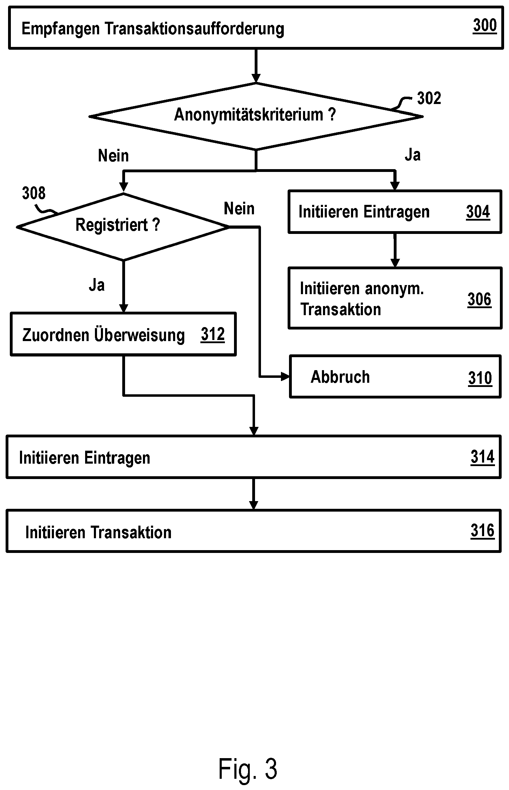

Figur 3 zeigt ein exemplarisches elektronisches Bezahlverfahren. Dieses Bezahlverfahren ermöglicht eine selektiv anonymisierende Überweisung eines Betrags einer Kryptowährung von einer Ausgangsadresse an eine Zieladresse unter Verwendung eines Servers und einer Blockchain. Dabei sind ein oder mehrere Adressen als Zwischenadressen für ein Ausführen von Transaktionen, welche ein Anonymitätskriterium verletzen, zugelassen. Die entsprechenden zugelassenen Adressen sind beispielsweise in einer Positivliste registriert, welche dem Server und/oder einem die Blockchain verwaltenden Blockchain-Server vorliegt.

In Block 300 empfängt der Server eine unter Verwendung eines Wallet-Programms erstellten Transaktionsaufforderung. Das entsprechende Wallet-Programm ist beispielsweise auf einem Nutzer-Computersystem, beispielweise ein mobiles tragbares Kommunikationssystem wie ein etwa ein Smartphone, installiert. Die Transaktionsaufforderung wird auf dem Nutzer-Computersystem erzeugt und über ein Netzwerk, beispielsweise das Internet, an den Server gesendet. Dies erfolgt beispielsweise über eine verschlüsselte Kommunikationsverbindung. Die entsprechende Kommunikationsverbindung ist beispielsweise mittels einer Ende-zu-Ende-Verschlüsselung verschlüsselt. Die Transaktionsaufforderung umfasst die Zieladresse und eine signierte Transaktionsanweisung für eine Transaktion des zu überweisenden Betrags von der Ausgangsadresse an eine Zwischenadresse des Servers. Die Transaktionsanweisung ist mit einem der Ausgangsadresse zugeordneten ersten privaten kryptographischen Schlüssel eines ersten asymmetrischen Schlüsselpaars des Wallet-Programms signiert. Diese Signatur weist eine Berechtigung zum Anweisen Transaktion von der entsprechenden Ausgangsadresse nach. Der Server verfügt über einen der Zwischenadresse zugeordneten ersten privaten kryptographischen Schlüssel eines ersten asymmetrischen Schlüsselpaars des Servers. Der Server ist mithin in der Lage Transaktionsanweisungen zum Weitertransferieren von Beträgen zu erzeugen, welche der entsprechenden Zwischenadresse zugeordnet wurden. Die Zieladresse ist mit einem zweiten öffentlichen kryptographischen Schlüssel eines zweiten asymmetrischen Schlüsselpaars des Servers verschlüsselt ist, womit allein der Server unter Verwendung eines zweiten privaten kryptographischen Schlüssels des zweiten asymmetrischen Schlüsselpaars des Servers in der Lage ist die Zieladresse zu entschlüsseln. Beispielsweise ist die gesamte Transaktionsaufforderung mit dem zweiten öffentlichen kryptographischen Schlüssel verschlüsselt. Beispielsweise ist nur die Zieladresse mit dem zweiten öffentlichen kryptographischen Schlüssel verschlüsselt. Beispielsweise sind weiter Zusatzinformationen, wie etwa ein Verwendungszweck oder eine zweite Zwischenadresse mit dem zweiten öffentlichen kryptographischen Schlüssel verschlüsselt.

In Block 302 wird geprüft, ob die Transaktionsaufforderung mit der Transaktion das Anonymitätskriterium erfüllt. Bei dem Anonymitätskriterium handelt es sich beispielsweise um einen zulässigen Maximalbetrag der Überweisung und/oder um einen zulässigen Maximalbetrag von Überweisungen innerhalb eines vordefinierten Zeitraums von der Ausgangsadresse und/oder zu der Zieladresse. Falls die Transaktionsaufforderung das Anonymitätskriterium erfüllt, wird das Verfahren in Block 304 mit einem Initiieren eines Eintragens der signierten Transaktionsanweisung in die Blockchain fortgesetzt. Die Eintragung erfolgt entweder durch den Server selbst, falls dieser ein Blockchain-Server ist, oder die signierte Transaktionsanweisung wird von dem Server an einen entsprechenden die Blockchain verwaltenden Blockchain-Server zur Eintragung weitergeleitet. In Block 306 wird eine anonymisierende zweiten Transaktion des Betrags von der Zwischenadresse an die Zieladresse unter Verwendung der Blockchain initiiert. Hierzu wurde die Zieladresse zuvor unter Verwendung des entsprechenden privaten kryptographischen Schlüssels des Servers entschlüsselt. Wiederum erfolgt die Eintragung beispielsweise entweder durch den Server selbst, falls dieser ein Blockchain-Server ist, oder der Server erzeugt eine entsprechende signierte zweite Transaktionsanweisung, welche von dem Server an einen entsprechenden die Blockchain verwaltenden Blockchain-Server zur Eintragung weitergeleitet wird.

Beispielsweise umfasst die anonymisierende zweite Transaktion ein Sammeln einer Mehrzahl von anonym an Zieladressen zu überweisenden Beträgen auf der Zwischenadresse des Servers. Diese einzelnen zu überweisenden Beträge werden jeweils in eine Mehrzahl von Teilbeträgen aufgeteilt, beispielsweise zufallsbasiert, und es werden signierten Transaktionsanweisungen für jeden der Teilbeträge erstellt. Die Transaktionsanweisungen sind jeweils mit dem ersten privaten kryptographischen Schlüssel des ersten asymmetrischen Schlüsselpaars des Servers signiert und umfassen jeweils eine Transaktion des jeweiligen Teilbetrags von der Zwischenadresse des Servers an die für den entsprechenden Teilbetrag vorgesehene Zieladresse. Das der einzelnen signierten Transaktionsanweisungen in die Blockchain wird zeitversetzt in einer durchmischten Reihenfolge initiiert. Der Zeitversatz und/oder die Reihenfolge werden beispielsweise zufallsbasiert gewählt.

Falls die Transaktionsaufforderung das Anonymitätskriterium verletzt, wird das Verfahren in Schritt 308 mit einer Prüfung fortgesetzt, ob eine Registrierung für das Wallet-Programm auf dem Server vorliegt. Falls dem nicht so ist, wird das Verfahren in Block 310 abgebrochen. Falls eine Registrierung vorliegt, folgt in Block 312 ein Zuordnen der Überweisung von der Ausgangsadresse an die Zieladresse zu einer von der ersten Registrierung umfassten Identität, welche auf dem ersten Server hinterlegt ist. Die entsprechende Zuordnung wird beispielsweise in einer von der Blockchain unabhängigen Datenbank des Servers gespeichert. Unter der Voraussetzung, dass die Zwischenadressen des Servers für ein Ausführen von Transaktionen zugelassen ist, die das Anonymitätskriterium verletzen, wird in Block 314 ein Eintragen der signierten Transaktionsanweisung in die Blockchain initiiert. Die Eintragung erfolgt entweder durch den Server selbst, falls dieser ein Blockchain-Server ist, oder die signierte Transaktionsanweisung wird von dem Server an einen entsprechenden die Blockchain verwaltenden Blockchain-Server zur Eintragung weitergeleitet. In Block 316 wird eine Transaktion des zu überweisenden Betrags von der Zwischenadresse des Servers an die Zieladresse unter Verwendung der Blockchain initiiert. Beispielsweise wird hierzu eine entsprechende Transaktionsanweisung von dem Server erstellt.

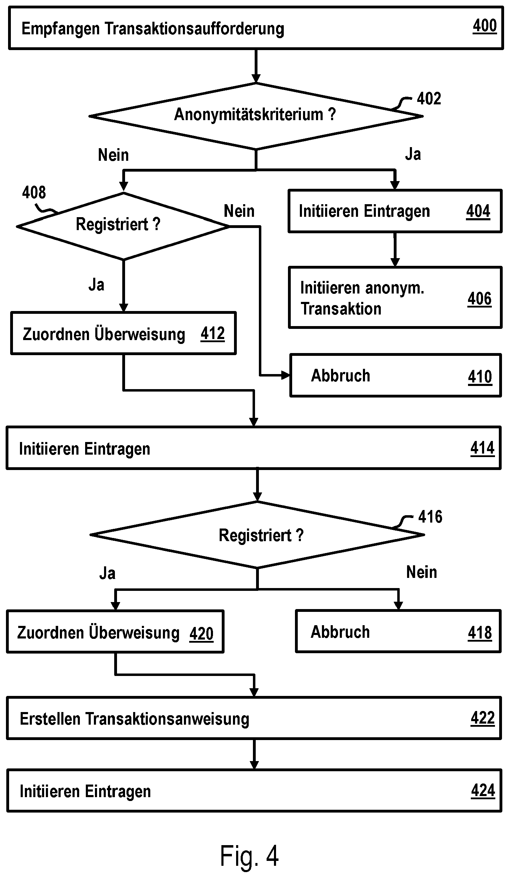

Figur 4 zeigt ein weiteres exemplarisches elektronisches Bezahlverfahren. Die Blöcke 400 bis 414 entsprechen dabei den Blöcken 300 bis 314 der Figur 3. In Block 414 wird geprüft, ob eine Registrierung der Zieladresse auf dem Server vorliegt. Falls dem nicht so ist, wird das Verfahren in Block 418 abgebrochen. Ein entsprechender Abbruch kann beispielsweise eine Rückabwicklung der ersten Transaktion des zu überweisenden Betrags umfassen. Im Zuge der Rückabwicklung wird der zu überweisende Betrag beispielsweise von der Zwischenadresse des Servers zurück an die Ausgangsadresse transferiert. Falls eine entsprechende Registrierung vorliegt, wird in Block 420 eine von dieser Registrierung umfasste zweite Identität, welche auf dem Server hinterlegt ist, zu der Überweisung von der Ausgangsadresse an die erste Zieladresse zugeordnet. Die entsprechende Zuordnung wird beispielsweise in der entsprechenden Datenbank des Servers gespeichert. In Block 422 wird von dem Server eine mit dem ersten privaten kryptographischen Schlüssel des ersten asymmetrischen Schlüsselpaars des Servers signierte weitere Transaktionsanweisung für eine zweite Transaktion des zu überweisenden Betrags von der Zwischenadresse des Servers an die Zieladresse erstellt. In Block 424 erfolgt ein Eintragen der signierten weiteren Transaktionsanweisung in die Blockchain. Die Eintragung erfolgt entweder durch den Server selbst, falls dieser ein Blockchain-Server ist, oder die signierte Transaktionsanweisung wird von dem Server an einen entsprechenden die Blockchain verwaltenden Blockchain-Server zur Eintragung weitergeleitet.

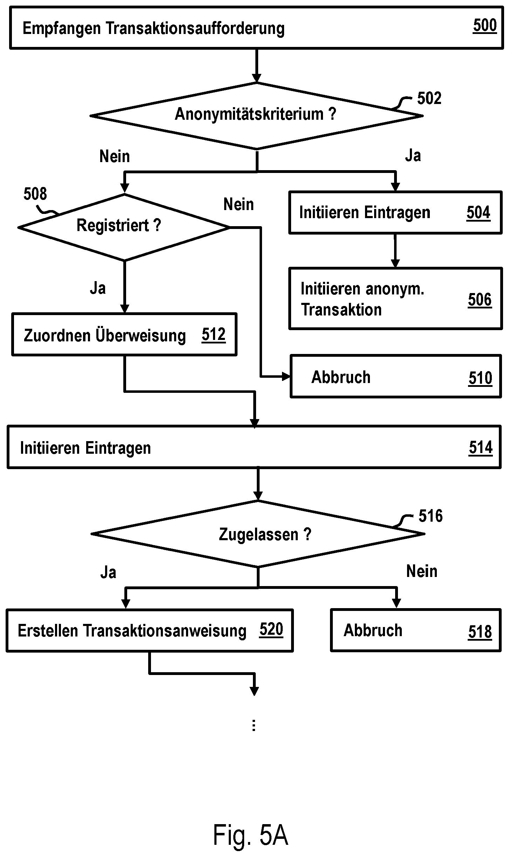

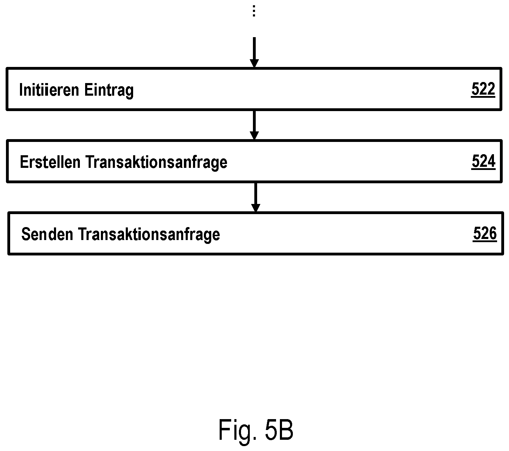

Figur 5 zeigt ein weiteres exemplarisches elektronisches Bezahlverfahren. Die Blöcke 500 bis 514 entsprechen dabei den Blöcken 400 bis 414 der Figur 4. Die in Block 500 empfangene Transaktionsaufforderung umfasst zusätzlich eine zweite Zwischenadresse eines zweiten Servers. In Block 516 wird geprüft, ob die zweite Zwischenadresse für ein Ausführen von Transaktionen, welche das Anonymitätskriterium verletzen, zugelassen ist. Falls dem nicht so ist, wird das Verfahren in Block 518 abgebrochen. Ein entsprechender Abbruch kann beispielsweise eine Rückabwicklung der ersten Transaktion des zu überweisenden Betrags umfassen. Im Zuge der Rückabwicklung wird der zu überweisende Betrag beispielsweise von der Zwischenadresse des Servers zurück an die Ausgangsadresse transferiert. Falls die zweite Zwischenadresse für ein Ausführen von Transaktionen, welche das Anonymitätskriterium verletzen, zugelassen ist, erfolgt in Block 520 ein Erstellen einer mit dem ersten privaten kryptographischen Schlüssel des ersten asymmetrischen Schlüsselpaars des Servers signierten Transaktionsanweisung für eine Transaktion des zu überweisenden Betrags von der Zwischenadresse des Servers an die zweite Zwischenadresse des zweiten Servers. Der zweite Server umfasst einen der zweiten Zwischenadresse zugeordneten ersten privaten kryptographischen Schlüssel, welcher es dem zweiten Server ermöglicht, den Betrag von der zweiten Zwischenadresse weiter an die Zieladresse zu transferieren.

In Block 522 wird ein Eintrag der signierten dritten Transaktionsanweisung in die Blockchain initiiert. Die Eintragung erfolgt entweder durch den Server selbst, falls dieser ein Blockchain-Server ist, oder die signierte Transaktionsanweisung wird von dem Server an einen entsprechen-den die Blockchain verwaltenden Blockchain-Server zur Eintragung weitergeleitet. In Block 524 wird eine Transaktionsanfrage an den zweiten Server erstellt und in Block 526 an den zweiten Server, beispielsweise über ein Netzwerk wie etwa das Internet, gesendet. Die Transaktionsanfrage umfasst eine Anfrage an den zweiten Server zum Weiterleiten des zu überweisenden Betrags an die Zieladresse sowie die Zieladresse. Ferner identifiziert die Transaktionsanfrage beispielsweise die in Block 522 eingetragene Transaktionsanweisung. Beispielsweise ist zumindest die entsprechende Zieladresse mit einem zweiten öffentlichen kryptographischen Schlüssel eines zweiten asymmetrischen Schlüsselpaars des zweiten Servers verschlüsselt.

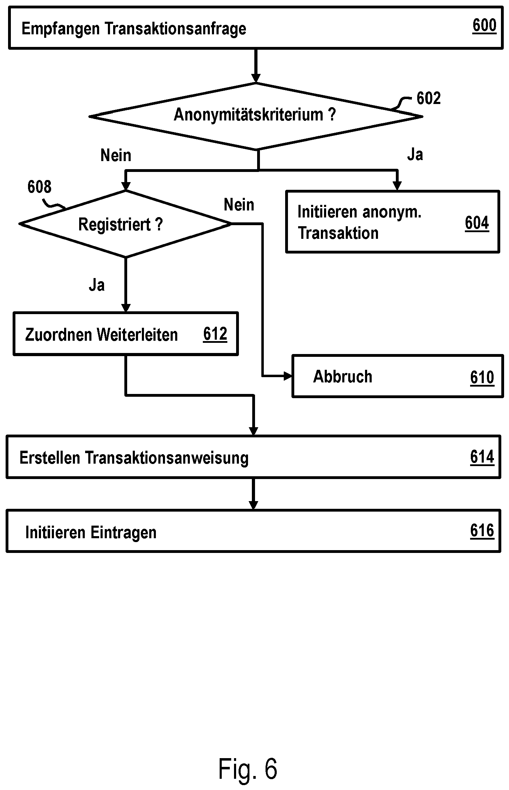

Figur 6 zeigt ein weiteres exemplarisches elektronisches Bezahlverfahren. In Block 600 empfängt der Server eine von einem weiteren Server erstellte Transaktionsanfrage. Die Transaktionsanfrage umfasst eine Anfrage zum Weiterleiten eines zu überweisenden Betrags von der Zwischenadresse des Servers an eine für diesen vorgesehene Zieladresse. Ferner umfasst die Transaktionsanfrage die entsprechende Zieladresse und identifiziert eine in die Blockchain eingetragene signierte Transaktionsanweisung einer Transaktion des Betrags von einer weiteren Zwischenadresse des weiteren Servers an die Zwischenadresse des Servers identifiziert. Dabei ist zumindest die Zieladresse mit dem ersten öffentlichen kryptographischen Schlüssel eines ersten asymmetrischen Schlüsselpaars des ersten Servers verschlüsselt. In Block 602wird geprüft, ob die empfangene Transaktionsanfrage mit der identifizierten Transaktion ein Anonymitätskriterium erfüllt. Bei dem Anonymitätskriterium handelt es sich beispielsweise um einen zulässigen Maxi-malbetrag der Überweisung und/oder um einen zulässigen Maximalbetrag von Überweisungen innerhalb eines vordefinierten Zeitraums von der Ausgangsadresse und/oder zu der Zieladresse. Falls die Transaktionsaufforderung das Anonymitätskriterium erfüllt, wird das Verfahren in Block 604 eine anonymisierende Transaktion des Betrags von der Zwischenadresse an die Zieladresse unter Verwendung der Blockchain initiiert. Hierzu wurde die Zieladresse zuvor unter Verwendung des entsprechenden privaten kryptographischen Schlüssels des Servers entschlüsselt. Die Eintragung entsprechender Transaktionsanweisungen zur Umsetzung der Transaktion werden beispielsweise entweder durch den Server selbst, falls dieser ein Blockchain-Server ist, in die Blockchain eingetragen oder der Server erzeugt eine entsprechende signierte Transaktionsanweisung, welche von dem Server an einen entsprechenden die Blockchain verwaltenden Blockchain-Server zur Eintragung weitergeleitet wird.

Beispielsweise ist die Transaktion eine anonymisierende Transaktion, welche ein Sammeln einer Mehrzahl von anonym an Zieladressen zu überweisenden Beträgen auf der Zwischenadresse des Servers umfasst. Diese einzelnen zu überweisenden Beträge werden jeweils in eine Mehrzahl von Teilbeträgen aufgeteilt, beispielsweise zufallsbasiert, und es werden signierten Transaktionsanweisungen für jeden der Teilbeträge erstellt. Die Transaktionsanweisungen sind jeweils mit dem ersten privaten kryptographischen Schlüssel des ersten asymmetrischen Schlüsselpaars des Servers signiert und umfassen jeweils eine Transaktion des jeweiligen Teilbetrags von der Zwischenadresse des Servers an die für den entsprechenden Teilbetrag vorgesehene Zieladresse. Das Eintragen der einzelnen signierten Transaktionsanweisungen in die Blockchain wird beispielsweise zeitversetzt in einer durchmischten Reihenfolge initiiert. Der Zeitversatz und/oder die Reihenfolge werden beispielsweise zufallsbasiert gewählt.

Falls die Transaktionsanfrage das Anonymitätskriterium verletzt, wird in Block 608 geprüft, ob eine Registrierung der Zieladresse auf dem ersten Server vorliegt. Falls dem nicht so ist, wird das Verfahren in Block 610 abgebrochen. Ein entsprechender Abbruch kann beispielsweise eine Rückabwicklung der Transaktion des zu überweisenden Betrags auf die Zwischenadresse des Servers umfassen. Im Zuge der Rückabwicklung wird der zu überweisende Betrag beispielsweise von der Zwischenadresse des Servers zurück an die weitere Zwischenadresse des weiteren Servers transferiert. Falls eine Registrierung vorliegt, erfolgt in Block 612 ein Zuordnen des angefragten Weiterleitens von der Ausgangsadresse an die Zieladresse zu einer von der entsprechenden Registrierung umfassten Identität, welche auf dem Server hinterlegt ist. Die entsprechende Zuordnung wird beispielsweise in der entsprechenden Datenbank des Servers gespeichert. In Block 612 wird eine signierte Transaktionsanweisung einer Transaktion des zu überweisenden Betrags von der Zwischenadresse des Servers an die Zieladresse. Die entsprechende Transaktionsanweisung ist unter Verwendung des ersten privaten kryptographischen Schlüssels des ersten asymmetrischen Schlüsselpaars des ersten Servers signiert. Unter der Voraussetzung, dass die Zwischenadressen für ein Ausführen von Transaktionen zugelassen ist, die das Anonymitätskriterium verletzen, wird in Block 616 ein Eintragen der signierten Transaktionsanweisung in die Blockchain initiiert. Die Eintragung erfolgt entweder durch den Server selbst, falls dieser ein Blockchain-Server ist, oder die signierte Transaktionsanweisung wird von dem Server an einen entsprechen-den die Blockchain verwaltenden Blockchain-Server zur Eintragung weitergeleitet.

### Bezugszeichenliste

- 100: Server
- 102: Speicher
- 104: geschützter Speicherbereich
- 106: privater kryptographischer Schlüssel
- 108: privater kryptographischer Schlüssel
- 110: öffentlicher kryptographischer Schlüssel
- 112: öffentlicher kryptographischer Schlüssel
- 114: Register
- 116: Registrierung
- 117: Registrierung
- 119: Registrierung
- 118: Datenbank
- 120: Prozessor
- 122: Programminstruktionen
- 124: Kommunikationsschnittstelle
- 140: Nutzercomputersystem
- 142: Speicher
- 144: Wallet-Programm
- 146: privater kryptographischer Schlüssel
- 148: öffentlicher kryptographischer Schlüssel
- 150: privater kryptographischer Schlüssel
- 152: öffentlicher kryptographischer Schlüssel
- 154: Prozessor
- 156: Programminstruktionen
- 158: Nutzerschnittstelle
- 160: Kommunikationsschnittstelle
- 170: Blockchain-Server
- 171: Blockchain-Server
- 172: Prozessor
- 173: Prozessor
- 174: Programminstruktionen
- 175: Programminstruktionen
- 176: Speicher
- 177: Speicher
- 178: Blockchain
- 180: Positivliste
- 182: Kommunikationsschnittstelle
- 183: Kommunikationsschnittstelle
- 184: Blockchain-Netzwerk
- 190: Netzwerk
- 195: System
- 200: Server
- 202: Speicher
- 204: geschützter Speicherbereich
- 206: privater kryptographischer Schlüssel
- 208: privater kryptographischer Schlüssel
- 210: öffentlicher kryptographischer Schlüssel
- 212: öffentlicher kryptographischer Schlüssel
- 214: Register
- 216: Registrierung
- 218: Datenbank
- 220: Prozessor
- 222: Programminstruktionen
- 224: Kommunikationsschnittstelle
- 230: Server
- 232: Speicher
- 234: geschützter Speicherbereich
- 236: privater kryptographischer Schlüssel
- 238: privater kryptographischer Schlüssel
- 240: öffentlicher kryptographischer Schlüssel
- 242: öffentlicher kryptographischer Schlüssel
- 244: Register
- 246: Registrierung
- 248: Datenbank
- 250: Prozessor
- 252: Programminstruktionen
- 254: Kommunikationsschnittstelle

## Patentansprüche

1. Elektronisches Bezahlverfahren für eine selektiv anonymisierende Überweisung eines ersten Betrags einer Kryptowährung von einer Ausgangsadresse an eine erste Zieladresse unter Verwendung eines ersten Servers (100) und einer Blockchain (178), wobei ein oder mehrere Adressen als Zwischenadressen für ein Ausführen von Transaktionen, welche ein Anonymitätskriterium verletzen, zugelassen sind,
wobei das durch den ersten Server (100) ausgeführte Bezahlverfahren umfasst:
• Empfangen einer unter Verwendung eines Wallet-Programms (144) erstellten Transaktionsaufforderung, wobei die Transaktionsaufforderung die erste Zieladresse und eine signierte erste Transaktionsanweisung für eine erste Transaktion des ersten zu überweisenden Betrags von der Ausgangsadresse an eine erste Zwischenadresse des ersten Servers (100) umfasst,
wobei die erste Transaktionsanweisung mit einem der Ausgangsadresse zugeordneten ersten privaten kryptographischen Schlüssel (146) eines ersten asymmetrischen Schlüsselpaars des Wallet-Programms (144) signiert ist,
wobei der erste Server (100) einen der ersten Zwischenadresse zugeordneten ersten privaten kryptographischen Schlüssel (106) eines ersten asymmetrischen Schlüsselpaars des ersten Servers (100) umfasst,
wobei zumindest die erste Zieladresse mit einem zweiten öffentlichen kryptographischen Schlüssel (112) eines zweiten asymmetrischen Schlüsselpaars des ersten Servers (100) verschlüsselt ist,
• Prüfen, ob die Transaktionsaufforderung mit der ersten Transaktion das Anonymitätskriterium erfüllt,
• falls die Transaktionsaufforderung das Anonymitätskriterium erfüllt, Initiieren eines Eintragens der signierten ersten Transaktionsanweisung in die Blockchain (178),
Initiieren einer anonymisierenden zweiten Transaktion des ersten Betrags von der ersten Zwischenadresse an die erste Zieladresse unter Verwendung der Blockchain (178),
• falls die Transaktionsaufforderung das Anonymitätskriterium verletzt, Prüfen ob eine erste Registrierung für das Wallet-Programm (144) auf dem ersten Server (100) vorliegt,
falls eine erste Registrierung (116) vorliegt, Zuordnen der Überweisung von der Ausgangsadresse an die erste Zieladresse zu einer von der ersten Registrierung (116) umfassten ersten Identität, welche auf dem ersten Server (100) hinterlegt ist,
unter der Voraussetzung, dass die erste Zwischenadresse für ein Ausführen von Transaktionen zugelassen ist, die das Anonymitätskriterium verletzen, Initiieren des Eintragens der signierten ersten Transaktionsanweisung in die Blockchain (178) und Initiieren einer dritten Transaktion des ersten Betrags von der ersten Zwischenadresse an die erste Zieladresse unter Verwendung der Blockchain (178),
wobei die anonymisierende zweite Transaktion umfasst:
• Sammeln einer Mehrzahl von anonym an Zieladressen zu überweisenden Beträgen auf der ersten Zwischenadresse,
• Aufteilen der einzelnen zu überweisenden Beträge jeweils in eine Mehrzahl von Teilbeträgen, wobei die Größen der Teilbeträge, in welche die Beträge jeweils aufgeteilt werden, zufallsbasiert gewählt werden,
• Erstellen einer signierten Transaktionsanweisung für jeden der Teilbeträge, wobei die Transaktionsanweisungen jeweils mit dem ersten privaten kryptographischen Schlüssel (106) des ersten asymmetrischen Schlüsselpaars des ersten Servers (100) signiert sind, wobei Transaktionsanweisungen jeweils eine Transaktion des jeweiligen Teilbetrags von der ersten Zwischenadresse an die für den entsprechenden Teilbetrag vorgesehene Zieladresse umfassen,
• zeitversetztes Initiieren eines Eintragens der einzelnen signierten Transaktionsanweisungen in die Blockchain (178) in einer durchmischten Reihenfolge,
wobei die durchmischte Reihenfolge zufallsbasiert gewählt wird und wobei die Größe des Zeitversatzes des Initiierens des Eintragens der einzelnen signierten Transaktionsanweisungen in die Blockchain (178) jeweils zufallsbasiert gewählt wird.

2. Bezahlverfahren nach Anspruch 1, wobei es sich bei dem ersten und zweiten asymmetrischen Schlüsselpaars des ersten Servers (100) um zwei verschiedene asymmetrische Schlüsselpaare handelt oder
wobei das erste und zweite asymmetrische Schlüsselpaar des ersten Servers (100) identisch sind.

3. Bezahlverfahren nach einem der vorangehenden Ansprüche, wobei die Anzahl der Teilbeträge, in welche die Beträge jeweils aufgeteilt werden, zufallsbasiert gewählt wird,
wobei die gewählte Anzahl beispielsweise jeweils größer oder gleich einer Mindestanzahl an Teilbeträgen ist und/oder wobei die gewählte Anzahl beispielsweise jeweils größer oder gleich einer Maximalanzahl an Teilbeträgen ist.

4. Bezahlverfahren nach einem der vorangehenden Ansprüche, wobei die gewählten Größen jeweils größer oder gleich einer Mindestgröße sind und/oder wobei die gewählten Größen beispielsweise jeweils kleiner oder gleich einer Maximalgröße sind, und/oder
wobei die Mindestgröße und/oder die Maximalgröße jeweils abhängig von dem aufzuteilenden Betrag ist.

5. Bezahlverfahren nach einem der vorangehenden Ansprüche,
wobei die gewählte Größe des Zeitversatzes jeweils größer oder gleich einer Mindestgröße ist und/oder wobei die gewählte Größe des Zeitversatzes beispielsweise jeweils kleiner oder gleich einer Maximalgröße ist.

6. Bezahlverfahren nach einem der vorangehenden Ansprüche, wobei die verschlüsselte erste Zieladresse unter Verwendung eines von dem ersten Server (100) umfassten zweiten privaten kryptographischen Schlüssel (108) des zweiten asymmetrischen Schlüsselpaars des ersten Servers (100) entschlüsselt wird und/oder
wobei die Transaktionsaufforderung einen Verwendungszweck der Überweisung umfasst, wobei der Verwendungszweck mit dem zweiten öffentlichen kryptographischen Schlüssel (112) des zweiten asymmetrischen Schlüsselpaars des ersten Servers (100) verschlüsselt ist und/oder
wobei die gesamte Transaktionsaufforderung mit dem zweiten öffentlichen kryptographischen Schlüssel (112) des zweiten asymmetrischen Schlüsselpaars des ersten Servers (100) verschlüsselt ist und/oder
wobei es sich bei dem Anonymitätskriterium um ein betragsabhängiges Kriterium handelt und/oder
wobei die Transaktionsaufforderung zurückgewiesen wird, falls keine erste Registrierung (116) für das Wallet-Programm (144) auf dem ersten Server (100) vorliegt.

7. Bezahlverfahren nach einem der vorangehenden Ansprüche, wobei das Eintragen der signierten ersten Transaktionsanweisung in die Blockchain (178) zurückgewiesen wird, falls die Transaktionsaufforderung das Anonymitätskriterium verletzt und die erste Zwischenadresse nicht zum Ausführen von Transaktionen zugelassen ist, die das Anonymitätskriterium verletzen.

8. Bezahlverfahren nach einem der vorangehenden Ansprüche, wobei die Transaktionsaufforderung eine Signatur mit einem zweiten privaten kryptographischen Schlüssel (150) eines zweiten asymmetrischen Schlüsselpaars des Wallet-Programms (144) umfasst, wobei ein zweiter öffentlicher kryptographischer Schlüssel (152) des zweiten asymmetrischen Schlüsselpaars des Wallet-Programms (144) für das Wallet-Programm (144) auf dem ersten Server (100) registriert ist, wobei die Registrierungsprüfung eine Prüfung der Signatur der Transaktionsaufforderung unter Verwendung des für das Wallet-Programm (144) registrierten öffentlichen kryptographischen Schlüssels (152) umfasst,
wobei die Registrierungsprüfung beispielsweise ein Ausführen eines Challenge-Response-Verfahrens unter Verwendung des für das Wallet-Programm (144) registrierten zweiten öffentlichen kryptographischen Schlüssels (152) umfasst.

9. Bezahlverfahren nach einem der vorangehenden Ansprüche, wobei es sich bei der dritten Transaktion um eine anonymisierende Transaktion handelt,
oder wobei das Initiieren der dritten Transaktion ein Prüfen umfasst, ob eine zweite Registrierung (117) für die erste Zieladresse auf dem ersten Server (100) vorliegt,
falls eine zweite Registrierung (117) vorliegt, Zuordnen einer von der zweiten Registrierung (117) umfassten zweiten Identität, welche auf dem ersten Server (100) hinterlegt ist, zu der Überweisung von der Ausgangsadresse an die erste Zieladresse,
Erstellen einer mit dem ersten privaten kryptographischen Schlüssel (106) des ersten asymmetrischen Schlüsselpaars des ersten Servers (100) signierten zweiten Transaktionsanweisung für eine zweite Transaktion des ersten zu überweisenden Betrags von der ersten Zwischenadresse des ersten Servers (100) an die erste Zieladresse, Initiieren eines Eintragens der signierten zweiten Transaktionsanweisung in die Blockchain (178),
oder wobei die Transaktionsaufforderung eine zweite Zwischenadresse eines zweiten Servers (200) umfasst, wobei das Initiieren der dritten Transaktion ein Prüfen umfasst, ob die zweite Zwischenadresse für ein Ausführen von Transaktionen, welche das Anonymitätskriterium verletzen, zugelassen ist,
falls die zweite Zwischenadresse für ein Ausführen von Transaktionen, welche das Anonymitätskriterium verletzen, zugelassen ist, Erstellen einer mit dem ersten privaten kryptographischen Schlüssel (106) des ersten asymmetrischen Schlüsselpaars des ersten Servers (100) signierten dritten Transaktionsanweisung für eine dritte Transaktion des ersten zu überweisenden Betrags von der ersten Zwischenadresse des ersten Servers (100) an die zweite Zwischenadresse des zweiten Servers (200), wobei der zweite Server (200) einen der zweiten Zwischenadresse zugeordneten ersten privaten kryptographischen Schlüssel (206) eines ersten asymmetrischen Schlüsselpaars des zweiten Servers (200) umfasst,
Initiieren eines Eintragens der signierten dritten Transaktionsanweisung in die Blockchain (178),
Erstellen einer ersten Transaktionsanfrage, wobei die erste Transaktionsanfrage eine erste Anfrage zum Weiterleiten des ersten zu überweisenden Betrags an die erste Zieladresse sowie die erste Zieladresse umfasst und die signierte dritte Transaktionsanweisung identifiziert, wobei zumindest die erste Zieladresse mit einem zweiten öffentlichen kryptographischen Schlüssel (212) eines zweiten asymmetrischen Schlüsselpaars des zweiten Servers (200) verschlüsselt ist,
Senden der ersten Transaktionsanfrage an den zweiten Server (200).

10. Bezahlverfahren nach einem der vorangehenden Ansprüche, wobei das Verfahren ferner umfasst:
• Empfangen einer von einem dritten Server (230) erstellten zweite Transaktionsanfrage, wobei die zweite Transaktionsanfrage eine zweite Anfrage zum Weiterleiten eines zweiten zu überweisenden Betrags von der ersten Zwischenadresse an eine zweite Zieladresse sowie die zweite Zieladresse umfasst und eine signierte vierte Transaktionsanweisung einer Transaktion des zweiten Betrags von einer dritten Zwischenadresse des dritten Servers (230) an die erste Zwischenadresse des ersten Servers (100) identifiziert, wobei zumindest die zweite Zieladresse mit dem ersten öffentlichen kryptographischen Schlüssel (110) eines ersten asymmetrischen Schlüsselpaars des ersten Servers (100) verschlüsselt ist,
wobei die vierte Transaktionsanweisung mit einem der dritten Zwischenadresse zugeordneten privaten kryptographischen Schlüssel (236) eines asymmetrischen Schlüsselpaars des dritten Servers (230) signiert ist,
• Prüfen, ob die zweite Transaktionsanfrage mit der dritten Transaktion das Anonymitätskriterium erfüllt,
• falls die zweite Transaktionsanfrage das Anonymitätskriterium verletzt, Prüfen ob eine dritte Registrierung (119) der zweiten Zieladresse auf dem ersten Server (100) vorliegt,
falls eine dritte Registrierung (119) vorliegt, Zuordnen des angefragten Weiterleitens von der Ausgangsadresse an die zweite Zieladresse zu einer von der dritten Registrierung (119) umfassten dritten Identität, welche auf dem ersten Server (100) hinterlegt ist,
Erstellen einer signierten fünften Transaktionsanweisung einer Transaktion des zweiten Betrags von der ersten Zwischenadresse an die zweite Zieladresse, wobei die fünfte Transaktionsanweisung unter Verwendung des ersten privaten kryptographischen Schlüssels (106) des ersten asymmetrischen Schlüsselpaars des ersten Servers (100) signiert ist,
unter der Voraussetzung, dass die erste Zwischenadresse für ein Ausführen von Transaktionen zugelassen ist, die das Anonymitätskriterium verletzen, Initiieren eines Eintragens der signierten fünften Transaktionsanweisung in die Blockchain (178), und/oder
wobei das Zuordnen ein Speichern der Zuordnung in einer von der Blockchain (178) unabhängigen Datenbank (118) des ersten Servers (100) umfasst und/oder
wobei es sich bei dem ersten Server (100) um einen Blockchain-Server handelt und das Eintragen der signierten ersten Transaktionsanweisung in die Blockchain (178) von dem ersten Server (100) selbst vorgenommen wird oder
wobei das Initiieren des Eintragens der signierten ersten Transaktionsanweisung in die Blockchain (178) ein Weiterleiten der signierten ersten Transaktionsanweisung von dem ersten Server (100) an einen Blockchain-Server (170, 171) zum Eintragen in die Blockchain (178) umfasst, wobei Voraussetzung für ein Eintragen der signierten ersten Transaktionsanweisung durch den Blockchain-Server (170, 171) in die Blockchain (178) beispielsweise ist, dass die erste Zwischenadresse zugelassen ist für ein Ausführen von Transaktionen, welche ein Anonymitätskriterium verletzen, und/oder
wobei es sich bei der Blockchain (178) um eine Konsortialblockchain handelt und/oder
wobei eine Positivliste (180) bereitgestellt wird, welche die als Zwischenadressen für ein Ausführen von Transaktionen, welche das Anonymitätskriterium verletzen, zugelassenen Adressen auflistet.

11. Server (100, 200, 230) für ein elektronischen Bezahlverfahren für eine selektiv anonymisierende Überweisung eines Betrags einer Kryptowährung von einer Ausgangsadresse an eine Zieladresse unter Verwendung einer Blockchain (178), wobei ein oder mehrere Adressen als Zwischenadressen für ein Ausführen von Transaktionen, welche ein Anonymitätskriterium verletzen, zugelassen sind,
wobei der Server (100, 200, 230) einen Prozessor (120, 220, 250), einen Speicher (102, 202, 232) mit ausführbaren Programminstruktionen (122, 222, 252) und eine Kommunikationsschnittstelle (124, 224, 254) umfasst, wobei ein Ausführen der Programminstruktionen (122, 222, 252) durch den Prozessor (120, 220, 250) den Server (100, 200, 230) dazu veranlasst das Bezahlverfahren auszuführen, welche umfasst:
• Empfangen einer unter Verwendung eines Wallet-Programms (144) erstellten Transaktionsaufforderung über ein Netzwerk (190) unter Verwendung der Kommunikationsschnittstelle (124, 224, 254), wobei die Transaktionsaufforderung die Zieladresse und eine signierte erste Transaktionsanweisung für eine erste Transaktion des zu überweisenden Betrags von der Ausgangsadresse an eine erste Zwischenadresse des Servers (100, 200, 230) umfasst,
wobei die erste Transaktionsanweisung mit einem der Ausgangsadresse zugeordneten ersten privaten kryptographischen Schlüssel (146) eines ersten asymmetrischen Schlüsselpaars des Wallet-Programms (144) signiert ist,
wobei in einem geschützten Speicherbereich (104, 204, 234) des Speichers (102, 202, 232) des Servers (100, 200, 230) ein der ersten Zwischenadresse zugeordneter erster privater kryptographischer Schlüssel (106) eines ersten asymmetrischen Schlüsselpaars des Servers (100, 200, 230) gespeichert ist,
wobei zumindest die Zieladresse mit einem zweiten öffentlichen kryptographischen Schlüssel (112) eines zweiten asymmetrischen Schlüsselpaars des Servers (100, 200, 230) verschlüsselt ist,
• Prüfen, ob die Transaktionsaufforderung mit der ersten Transaktion das Anonymitätskriterium erfüllt,
• falls die Transaktionsaufforderung das Anonymitätskriterium erfüllt, Initiieren eines Eintragens der signierten ersten Transaktionsanweisung in die Blockchain (178),
Initiieren einer anonymisierenden zweiten Transaktion des Betrags von der ersten Zwischenadresse an die Zieladresse unter Verwendung der Blockchain (178),
• falls die Transaktionsaufforderung das Anonymitätskriterium verletzt, Prüfen ob eine erste Registrierung (116) für das Wallet-Programm (144) auf dem Server (100, 200, 230) vorliegt,
falls eine erste Registrierung (116) vorliegt, Zuordnen der Überweisung von der Ausgangsadresse an die Zieladresse zu einer von der ersten Registrierung (116) umfassten ersten Identität, welche auf dem Server (100, 200, 230) hinterlegt ist,
unter der Voraussetzung, dass die erste Zwischenadresse für ein Ausführen von Transaktionen zugelassen ist, die das Anonymitätskriterium verletzen, Initiieren des Eintragens der signierten ersten Transaktionsanweisung in die Blockchain (178) und Initiieren einer dritten Transaktion des Betrags von der ersten Zwischenadresse an die Zieladresse unter Verwendung der Blockchain (178),
wobei die anonymisierende zweite Transaktion umfasst:
• Sammeln einer Mehrzahl von anonym an Zieladressen zu überweisenden Beträgen auf der ersten Zwischenadresse,
• Aufteilen der einzelnen zu überweisenden Beträge jeweils in eine Mehrzahl von Teilbeträgen, wobei die Größen der Teilbeträge, in welche die Beträge jeweils aufgeteilt werden, zufallsbasiert gewählt werden,
• Erstellen einer signierten Transaktionsanweisung für jeden der Teilbeträge, wobei die Transaktionsanweisungen jeweils mit dem ersten privaten kryptographischen Schlüssel (106) des ersten asymmetrischen Schlüsselpaars des ersten Servers (100) signiert sind, wobei Transaktionsanweisungen jeweils eine Transaktion des jeweiligen Teilbetrags von der ersten Zwischenadresse an die für den entsprechenden Teilbetrag vorgesehene Zieladresse umfassen,
• zeitversetztes Initiieren eines Eintragens der einzelnen signierten Transaktionsanweisungen in die Blockchain (178) in einer durchmischten Reihenfolge,
wobei die durchmischte Reihenfolge zufallsbasiert gewählt wird und wobei die Größe des Zeitversatzes des Initiierens des Eintragens der einzelnen signierten Transaktionsanweisungen in die Blockchain (178) jeweils zufallsbasiert gewählt wird.

12. System (195) für ein elektronisches Bezahlverfahren für eine selektiv anonymisierende Überweisung eines Betrags einer Kryptowährung von einer Ausgangsadresse an eine Zieladresse unter Verwendung einer Blockchain (178), wobei das System (195) eine Mehrzahl von Servern (100, 200, 230) nach Anspruch 11 umfasst.

13. System (195) nach Anspruch 12, welches ferner ein Nutzercomputersystem (140) umfasst, wobei das Nutzercomputersystem (140) einen Prozessor (154), einen Speicher (142) mit ausführbaren Programminstruktionen (156) und eine Kommunikationsschnittstelle (160) umfasst, wobei auf dem Nutzercomputersystem (140) das Wallet-Programm (144) installiert ist, wobei ein Ausführen der Programminstruktionen (156) durch den Prozessor (154) das Nutzercomputersystem (140) dazu veranlasst die Transaktionsaufforderung zu erstellen und unter Verwendung der Kommunikationsschnittstelle (160) über das Netzwerk (190) an einen der Server (100, 200, 230) des Systems (195) zu senden.

## Claims

1. An electronic payment method for a selectively anonymizing transfer of a first amount of a cryptocurrency from a source address to a first destination address using a first server (100) and a blockchain (178), wherein one or more addresses are allowed as intermediate addresses for executing transactions that violate an anonymity criterion,
wherein the payment method executed by the first server (100) comprises:
• receiving a transaction request generated using a wallet program (144), wherein the transaction request comprises the first destination address and a signed first transaction instruction for a first transaction of the first amount to be transferred from the source address to a first intermediate address of the first server (100),
wherein the first transaction instruction is signed by a first private cryptographic key (146) of a first asymmetrical key pair of the wallet program (144) associated with the source address,
wherein the first server (100) comprises a first private cryptographic key (106) of a first asymmetrical key pair of the first server (100) associated with the first intermediate address,
wherein at least the first destination address is encrypted by a second public cryptographic key (112) of a second asymmetrical key pair of the first server (100),
• checking whether the transaction request with the first transaction meets the anonymity criterion,
• if the transaction request meets the anonymity criterion, initiating an entry of the signed first transaction instruction into the blockchain (178), initiating an anonymizing second transaction of the first amount from the first intermediate address to the first destination address using the blockchain (178),
• if the transaction request violates the anonymity criterion, checking whether there is a first registration for the wallet program (144) on the first server (100),
if a first registration (116) exists, assigning the transfer from the source address to the first destination address with a first identity included in the first registration (116), which is stored on the first server (100),
provided that the first intermediate address is authorized to execute transactions which violate the anonymity criterion, initiating the entry of the signed first transaction instruction into the blockchain (178) and initiating a third transaction of the first amount from the first intermediate address to the first destination address using the blockchain (178),
wherein the anonymizing second transaction comprises:
• collecting a plurality of amounts to be transferred anonymously to destination addresses on the first intermediate address,
• dividing each of the amounts to be transferred into a plurality of partial amounts, wherein the amounts of the partial amounts into which the amounts are divided are selected in a randomized manner,
• creating a signed transaction instruction for each of the partial amounts, wherein the transaction instructions are each signed by the first private cryptographic key (106) of the first asymmetric key pair of the first server (100), wherein transaction instructions each comprise a transaction of the respective partial amount from the first intermediate address to the destination address intended for the corresponding partial amount,
• initiating a time-delayed entry of the individual signed transaction instructions into the blockchain (178) in a shuffled sequence,
wherein the shuffled sequence is selected in a randomized manner and wherein the size of the time delay for initiating the entry of the individual signed transaction instructions into the blockchain (178) is selected randomly in each case.

2. The payment method according to claim 1, wherein the first and second asymmetrical key pair of the first server (100) are two different asymmetric key pairs or
wherein the first and second asymmetric key pairs of the first server (100) are identical.

3. The payment method according to any one of the preceding claims,
wherein the number of partial amounts, into which the amounts are divided respectively, is selected in a randomized manner,
wherein the selected number is for example greater than or equal to a minimum number of partial amounts in each case and/or wherein the selected number is for example greater than or equal to a maximum number of partial amounts in each case.

4. The payment method according to any one of the preceding claims,
wherein the selected sizes are for example greater than or equal to a minimum size and/or wherein the selected sizes are for example less than or equal to a maximum size,
wherein the minimum size and/or the maximum size is for example dependent on the amount to be divided.

5. The payment method according to any one of the preceding claims,
wherein the selected size of the time-delay is for example greater than or equal to a minimum size and/or wherein the selected size of the time-delay is for example less than or equal to a maximum size.

6. The payment method according to any one of the preceding claims,
wherein the encrypted first destination address is decrypted using a second private cryptographic key (108) of the second asymmetrical key pair of the first server (100) comprised by the first server (100) and/or
wherein the transaction request comprises a purpose of the transfer,
wherein the purpose is encrypted by the second public cryptographic key (112) of the second asymmetrical key pair of the first server (100) and/or wherein the entire transaction request is encrypted by the second public cryptographic key (112) of the second asymmetrical key pair of the first server (100) and/or
wherein the anonymity criterion is an amount-dependent criterion and/or wherein the transaction request is rejected is there is no first registration (116) for the wallet program (144) on the first server (100).

7. The payment method according to any one of the preceding claims, wherein the entry of the signed first transaction instruction into the blockchain (178) is rejected if the transaction request violates the anonymity criterion and the first intermediate address is not authorized to execute transactions which violate the anonymity criterion.

8. The payment method according to any one of the preceding claims,
wherein the transaction request comprises a signature with a second private cryptographic key (150) of a second asymmetrical key pair of the wallet program (144), wherein a second public cryptographic key (152) of the second asymmetrical key pair of the wallet program (144) is registered for the wallet program (144) on the first server (100), wherein the registration check comprises checking the signature of the transaction request using the public cryptographic key (152) registered for the wallet program (144),
wherein the registration check comprises for example executing a challenge-response procedure using the second public cryptographic key (152) registered for the wallet program (144).

9. The payment method according to any one of the preceding claims,
wherein the third transaction is an anonymizing transaction,
or wherein the initiation of the third transaction comprises checking whether a second registration (117) for the first destination address is present on the first server (100),
if a second registration (117) is present, associating a second identity comprised by the second registration (117), which is stored on the first server (100) with the transfer from the source address to the first destination address,
creating a second transaction instruction signed by the first private cryptographic key (106) of the first asymmetrical key pair of the first server (100) for a second transaction of the first amount to be transferred from the first intermediate address of the first server (100) to the first destination address, initiating an entry of the signed second transaction instruction into the blockchain (178),
or wherein the transaction request comprises a second intermediate address of a second server (200), wherein initiating the third transaction comprises checking whether the second intermediate address is authorized for executing transactions which violate the anonymity criterion,
if the second intermediate address is authorized for executing transactions, which violate the anonymity criterion, creating a third transaction instruction signed by the first private cryptographic key (106) of the first asymmetrical key pair of the first server (100) for a third transaction of the first amount to be transferred from the first intermediate address of the first server (100) to the second intermediate address of the second server (200), wherein the second server (200) comprises a first private cryptographic key (206) of a first asymmetrical key pair of the second server (200) assigned to the second intermediate address,
initiating an entry of the signed third transaction instruction into the blockchain (178),
creating a first transaction request, wherein the first transaction request comprises a first request for forwarding the first amount to be transferred to the first destination address and the first destination address and identifies the signed third transaction instruction, wherein at least the first destination address is encrypted by a second public cryptographic key (212) of a second asymmetrical key pair of the second server (200),
sending the first transaction request to the second server (200).

10. The payment method according to any one of the preceding claims,
wherein the method further comprises:
• receiving a second transaction request created by a third server (230), wherein the second transaction request comprises a second request for forwarding a second amount to be transferred from the first intermediate address to a second destination address and the second destination address and identifies a signed fourth transaction instruction of a transaction of the second amount from a third intermediate address of the third server (230) to the first intermediate address of the first server (100), wherein at least the second destination address is encrypted by the first public cryptographic key (110) of a first asymmetrical key pair of the first server (100),
wherein the fourth transaction instruction is signed by a private cryptographic key (236) of an asymmetrical key pair of the third server (230) assigned to the third intermediate address,
• checking whether the second transaction request with the third transaction meets the anonymity criterion,
• if the second transaction request violates the anonymity criterion, checking whether there is a third registration (119) of the second destination address on the first server (100),
if a third registration (119) is present, assigning the requested forwarding from the source address to the second destination address to a third identity included in the third registration (119), which is stored on the first server (100),
creating a signed fifth transaction instruction of a transaction of the second amount from the first intermediate address to the second destination address, wherein the fifth transaction instruction is signed using the first private cryptographic key (106) of the first asymmetrical key pair of the first server (100),
provided that the first intermediate address is authorized for executing transactions which violate the anonymity criterion, initiating an entry of the signed fifth transaction instruction into the blockchain (178), and/or wherein the assignment comprises saving the assignment in a database (118) of the first server (100) that is independent of the blockchain (178), and/or
wherein the first server (100) is a blockchain server and the entry of the signed first transaction instruction into the blockchain (178) is performed by the first server (100) itself, or
wherein initiating the entry of the signed first transaction instruction into the blockchain (178) comprises forwarding the signed first transaction instruction from the first server (100) to a blockchain server (170, 171) for entry into the blockchain (178), wherein the prerequisite for an entry of the signed first transaction instruction into the blockchain (178) by the blockchain server (170, 171) is for example that the first intermediate address is authorized for executing transactions which violate an anonymity criterion, and/or
wherein the blockchain (178) is a consortium blockchain and/or
wherein a whitelist (180) is provided which lists the addresses authorized as intermediate addresses for executing transactions, which violate the anonymity criterion.

11. A server (100, 200, 230) for an electronic payment method for a selectively anonymizing transfer of an amount of cryptocurrency from a source address to a destination address using a blockchain (178), wherein one or more addresses are authorized as intermediate addresses for executing transactions which violate an anonymity criterion,
wherein the server (100, 200, 230) comprises a processor (120, 220, 250), a memory (102, 202, 232) having executable program instructions (122, 222, 252) and a communication interface (124, 224, 254), wherein executing the program instructions (122, 222, 252) by the processor (120, 220, 250) causes the server (100, 200, 230) to execute the payment method, which comprises:
• receiving a transaction request created using a wallet program (144) over a network (190) using the communication interface (124, 224, 254), wherein the transaction request comprises the destination address and a signed first transaction instruction for a first transaction of the amount to be transferred from the source address to a first intermediate address of the server (100, 200, 230),
wherein the first transaction instruction is signed with a first private cryptographic key (146) of a first asymmetrical key pair of the wallet program (144) assigned to the source address,
wherein a first private cryptographic key (106) of a first asymmetrical key pair of the server (100, 200, 230) associated with the first intermediate address is stored in a protected memory area (104, 204, 234) of the memory (102, 202, 232) of the server (100, 200, 230),
wherein at least the destination address is encrypted with a second public cryptographic key (112) of a second asymmetrical key pair of the server (100, 200, 230),
• checking whether the transaction request with the first transaction meets the anonymity criterion,
• if the transaction request meets the anonymity criterion, initiating an entry of the signed first transaction instruction into the blockchain (178), initiating an anonymizing second transaction of the amount from the first intermediate address to the destination address using the blockchain (178),
• if the transaction request violates the anonymity criterion, checking whether there is a first registration (116) for the wallet program (144) on the server (100, 200, 230),
if a first registration (116) is present, assigning the transfer from the source address to the destination address to a first identity included in the first registration (116) which is stored on the server (100, 200, 230), provided that the first intermediate address is authorized to execute transactions that violate the anonymity criterion, initiating the entry of the signed first transaction instruction into the blockchain (178) and initiating a third transaction of the amount from the first intermediate address to the destination address using the blockchain (178),
wherein the anonymizing second transaction comprises:
• collecting a plurality of amounts to be transferred anonymously to destination addresses on the first intermediate address,
• dividing each of the amounts to be transferred into a plurality of partial amounts, wherein the amounts of the partial amounts into which the amounts are divided are selected in a randomized manner,
• creating a signed transaction instruction for each of the partial amounts, wherein the transaction instructions are each signed by the first private cryptographic key (106) of the first asymmetric key pair of the first server (100), wherein transaction instructions each comprise a transaction of the respective partial amount from the first intermediate address to the destination address intended for the corresponding partial amount,
• initiating a time-delayed entry of the individual signed transaction instructions into the blockchain (178) in a shuffled sequence,
wherein the shuffled sequence is selected in a randomized manner and wherein the size of the time delay for initiating the entry of the individual signed transaction instructions into the blockchain (178) is selected randomly in each case.

12. A system (195) for an electronic payment method for a selectively anonymizing transfer of an amount of a cryptocurrency from a source address to a destination address using a blockchain (178), wherein the system (195) comprises a plurality of servers (100, 200, 230) according to claim 11.

13. The system (195) according to claim 12, further comprising a user computer system (140), wherein the user computer system (140) comprises a processor (154), a memory (142) with executable program instructions (156), and a communication interface (160), wherein the wallet program (144) is installed on the user computer system (140), wherein execution of the program instructions (156) by the processor (154) causes the user computer system (140) to create the transaction request and send it to one of the servers (100, 200, 230) of the system (195) over the network (190) using the communication interface (160).

## Revendications

1. Procédé de paiement électronique permettant un transfert à anonymisation sélective d'un premier montant d'une crypto monnaie à partir d'une adresse de départ vers une première adresse cible moyennant l'emploi d'un premier serveur (100) et d'une chaine de blocs (178), dans lequel une ou plusieurs adresses sont autorisées en tant qu'adresses intermédiaires pour une exécution de transactions, lesquelles enfreignent un critère d'anonymat,
où le procédé de paiement exécuté par le premier serveur (100) comprend :
• la réception d'une demande de transaction établie moyennant l'emploi d'un programme de portefeuille électronique (144), où la demande de transaction comprend la première adresse cible et un premier ordre de transaction signé pour la première transaction du premier montant à transférer de l'adresse de départ vers une première adresse intermédiaire du premier serveur (100),
où le premier ordre de transaction est signé avec une première clé cryptographique privée (146) d'une première paire de clés asymétrique du programme de portefeuille électronique (144) associée à l'adresse de départ,
où le premier serveur (100) comprend une première clé cryptographique privée (106) d'une première paire de clés asymétrique du premier serveur (100) associée à la première adresse intermédiaire,
où au moins la première adresse cible est chiffrée avec une deuxième clé cryptographique publique (112) d'une deuxième paire de clés asymétrique du premier serveur (100),
• la vérification si la demande de transaction avec la première transaction satisfait le critère d'anonymat,
• dans le cas où la demande de transaction satisfait le critère d'anonymat, l'initiation d'une entrée du premier ordre de transaction signé dans la chaine de blocs (178),
l'initiation d'une deuxième transaction anonymisée du premier montant de la première adresse intermédiaire à la première adresse cible moyennant l'emploi de la chaine de blocs (178),
• dans le cas où la demande de transaction enfreint le critère d'anonymat, la vérification si un premier enregistrement pour le programme de portefeuille électronique (144) est présent sur le premier serveur (100),
dans le cas où un premier enregistrement (116) est présent, l'association du transfert de l'adresse de départ vers la première adresse cible à une première identité, comprise par le premier enregistrement (116), laquelle est consignée sur le premier serveur (100),
à la condition préalable que la première adresse intermédiaire soit autorisée pour une exécution de transactions qui n'enfreignent pas le critère d'anonymat, l'initiation de l'entrée du premier ordre de transaction signé dans la chaine de blocs (178) et l'initiation d'une troisième transaction du premier montant de la première adresse intermédiaire vers la première adresse cible moyennant l'emploi de la chaine de blocs (178),
dans lequel la deuxième transaction anonymisée comprend :
• le regroupement d'une multiplicité de montants à transférer de manière anonyme à des adresses cibles sur la première adresse intermédiaire,
• la division des montants à transférer individuels en respectivement une multiplicité de montants partiels, où les tailles des montants partiels, dans lesquels les montants sont respectivement divisés, sont choisies de manière aléatoire,
• la production d'un ordre de transaction signé pour chacun des montants partiels, où les ordres de transaction sont respectivement signés avec la première clé cryptographique privée (106) de la première paire de clés asymétrique du premier serveur (100), où des ordres de transaction comprennent respectivement une transaction du montant partiel respectif de la première adresse intermédiaire vers l'adresse cible prévue pour le montant partiel correspondant,
• l'initiation décalée dans le temps d'une entrée des ordres de transaction individuels signés dans la chaine de blocs (178) dans un ordre mixte,
où l'ordre mixte est choisi de manière aléatoire et où la grandeur du décalage dans le temps de l'initiation de l'entrée des ordres de transaction individuels signés dans la chaine de blocs (178) est respectivement choisie de manière aléatoire.

2. Procédé de paiement selon la revendication 1, dans lequel, dans le cas des première et deuxième paires de clés asymétriques du premier serveur (100), il s'agit de deux paires de clés asymétriques différentes, ou
dans lequel les première et deuxième paires de clés asymétriques du premier serveur (100) sont identiques.

3. Procédé de paiement selon l'une des revendications précédentes, dans lequel le nombre des montants partiels, dans lesquels les montants sont respectivement divisés, est choisi de manière aléatoire,
dans lequel le nombre choisi est, par exemple, respectivement supérieur ou égal à un nombre minimal de montants partiels et/ou dans lequel le nombre choisi est, par exemple, supérieur ou égal à un nombre maximal de montants partiels.

4. Procédé de paiement selon l'une des revendications précédentes, dans lequel les grandeurs choisies sont respectivement supérieures ou égales à une grandeur minimale et/ou dans lequel les grandeurs choisies sont, par exemple, respectivement inférieures ou égales à une grandeur maximale,
et/ou
dans lequel la grandeur minimale et/ou la grandeur maximale sont respectivement dépendantes du montant à diviser.

5. Procédé de paiement selon l'une des revendications précédentes,
dans lequel la grandeur choisie du décalage dans le temps est respectivement supérieure ou égale à une grandeur minimale, et/ou la grandeur choisie du décalage dans le temps est, par exemple, respectivement inférieure ou égale à une grandeur maximale.

6. Procédé de paiement selon l'une des revendications précédentes, dans lequel la première adresse cible chiffrée est déchiffrée moyennant l'emploi d'une deuxième clé cryptographique privée (108) de la deuxième paire de clés asymétrique du premier serveur (100) comprise par le premier serveur (100), et/ou
dans lequel la demande de transaction comprend une référence de paiement du transfert, où la référence de paiement est chiffrée avec la deuxième clé cryptographique publique (112) de la deuxième paire de clés asymétrique du premier serveur (100), et/ou
dans lequel la demande de transaction complète est chiffrée avec la deuxième clé cryptographique publique (112) de la deuxième paire de clés asymétrique du premier serveur (100), et/ou
dans lequel, dans le cas du critère d'anonymat, il s'agit d'un critère dépendant du montant, et/ou
dans lequel la demande de transaction est rejetée dans le cas où aucun premier enregistrement (116) n'est présent pour le programme de portefeuille électronique (144) sur le premier serveur (100).

7. Procédé de paiement selon l'une des revendications précédentes, dans lequel l'entrée du premier ordre de transaction signé dans la chaine de blocs (178) est rejetée dans le cas où la demande de transaction enfreint le critère d'anonymat et la première adresse intermédiaire n'est pas autorisée à l'exécution de transactions qui enfreignent le critère d'anonymat.

8. Procédé de paiement selon l'une des revendications précédentes, dans lequel la demande de transaction comprend une signature avec une deuxième clé cryptographique privée (150) d'une deuxième paire de clés asymétrique du programme de portefeuille électronique (144), où une deuxième clé cryptographique publique (152) de la deuxième paire de clés asymétrique du programme de portefeuille électronique (144) est enregistrée pour le programme de portefeuille électronique (144) sur le premier serveur (100), où la vérification d'enregistrement comprend une vérification de la signature de la demande de transaction moyennant l'emploi de la clé cryptographique publique (152) enregistrée pour le programme de portefeuille électronique (144),
dans lequel la vérification d'enregistrement comprend, par exemple, un procédé de défi-réponse moyennant l'emploi de la deuxième clé cryptographique publique (152) enregistrée pour le programme de portefeuille électronique (144).

9. Procédé de paiement selon l'une des revendications précédentes, dans lequel, dans le cas de la troisième transaction, il s'agit d'une transaction anonymisée,
ou dans lequel l'initiation de la troisième transaction comprend une vérification si un deuxième enregistrement (117) est présent pour la première adresse cible sur le premier serveur (100),
dans le cas où il y a un deuxième enregistrement (117), l'association d'une deuxième identité comprise par le deuxième enregistrement (117) laquelle est consignée sur le premier serveur (100) avec le transfert de l'adresse de départ vers la première adresse cible,
l'établissement d'un deuxième ordre de transaction signé avec la première clé cryptographique privée (106) de la première paire de clés asymétrique du premier serveur (100) pour une deuxième transaction du premier montant à transférer de la première adresse intermédiaire du premier serveur (100) vers la première adresse cible, l'initiation d'une entrée du deuxième ordre de transaction signé dans la chaine de blocs (178),
ou dans lequel la demande de transaction comprend une deuxième adresse intermédiaire d'un deuxième serveur (200), où l'initiation de la troisième transaction comprend une vérification si la deuxième adresse intermédiaire est autorisée pour une exécution de transactions, lesquelles enfreignent le critère d'anonymat,
dans le cas où la deuxième adresse intermédiaire est autorisée pour une exécution de transactions, lesquelles enfreignent le critère d'anonymat, l'établissement d'un troisième ordre de transaction signé avec la première clé cryptographique privée (106) de la première paire de clés asymétrique du premier serveur (100) pour une troisième transaction du premier montant à transférer de la première adresse intermédiaire du premier serveur (100) vers la deuxième adresse intermédiaire du deuxième serveur (200), où le deuxième serveur (200) comprend une première clé cryptographique privée (206) d'une première paire de clés asymétrique du deuxième serveur (200) associée à la deuxième adresse intermédiaire,
l'initiation d'une entrée du troisième ordre de transaction signé dans la chaine de blocs (178),
l'établissement d'une première demande de transaction, où la première demande de transaction comprend une première demande pour la transmission du premier montant à transférer vers la première adresse cible ainsi que la première adresse cible et identifie le troisième ordre de transaction signé, où au moins la première adresse cible est chiffrée avec une deuxième clé cryptographique publique (212) d'une deuxième paire de clés asymétrique du deuxième serveur (200),
l'envoi de la première demande de transaction au deuxième serveur (200).

10. Procédé de paiement selon l'une des revendications précédentes, le procédé comprenant en outre :
• la réception d'une deuxième demande de transaction établie par un troisième serveur (230), où la deuxième demande de transaction comprend une deuxième demande pour la transmission d'un deuxième montant à transférer de la première adresse intermédiaire vers une deuxième adresse cible ainsi que la deuxième adresse cible, et identifie un quatrième ordre de transaction signé d'une transaction du deuxième montant d'une troisième adresse intermédiaire du troisième serveur (230) vers la première adresse intermédiaire du premier serveur (100), où au moins la deuxième adresse cible est chiffrée avec la première clé cryptographique publique (110) d'une première paire de clés asymétrique du premier serveur (100),
dans lequel le quatrième ordre de transaction est signé avec une clé cryptographique privée (236) d'une paire de clés asymétrique du troisième serveur (230) associée à la troisième adresse intermédiaire,
• la vérification si la deuxième demande de transaction avec la troisième transaction satisfait le critère d'anonymat,
• dans le cas où la deuxième demande de transaction enfreint le critère d'anonymat, la vérification si un troisième enregistrement (119) de la deuxième adresse cible est présent sur le premier serveur (100),
dans le cas où il y a un troisième enregistrement (119), l'association de la transmission demandée de l'adresse de départ vers la deuxième adresse cible à une troisième identité, comprise par le troisième enregistrement (119), laquelle est consignée sur le premier serveur (100),
l'établissement d'un cinquième ordre de transaction signé d'une transaction du deuxième montant de la première adresse intermédiaire à la deuxième adresse cible, où le cinquième ordre de transaction est signé moyennant l'emploi de la première clé cryptographique privée (106) de la première paire de clés asymétrique du premier serveur (100),
à la condition que la première adresse intermédiaire est autorisée pour une exécution de transactions qui enfreignent le critère d'anonymat, l'initiation d'une entrée du cinquième ordre de transaction signé dans la chaine de blocs (178),
et/ou
dans lequel l'association comprend un enregistrement de l'association dans une banque de données (118) indépendante de la chaine de blocs (178) du premier serveur (100), et/ou
dans lequel, dans le cas du premier serveur (100), il s'agit d'un serveur de chaine de blocs et l'entrée du premier ordre de transaction signé dans la chaine de blocs (178)) est assurée par le premier serveur (100) lui-même, ou
dans lequel l'initiation de l'entrée du premier ordre de transaction signé dans la chaine de blocs (178) comprend une transmission du premier ordre de transaction signé du premier serveur (100)) vers un serveur de chaine de blocs (170, 171) pour l'entrée dans la chaine de blocs (178), où une condition préalable pour une entrée du premier ordre de transaction signé par le serveur de chaine de blocs (170, 171) dans la chaine de blocs (178) est, par exemple, que la première adresse intermédiaire est autorisée pour une exécution de transactions, lesquelles enfreignent le critère d'anonymat, et/ou
dans lequel, dans le cas de la chaine de blocs (178), il s'agit d'une chaine de blocs consortiale, et/ou
dans lequel une liste positive (180) est fournie, laquelle répertorie des adresses autorisées en tant qu'adresses intermédiaires pour une exécution de transactions, lesquelles enfreignent le critère d'anonymat.

11. Serveur (100, 200, 230) destiné à un procédé de paiement électronique permettant un transfert à anonymisation sélective d'un montant d'une crypto monnaie à partir d'une adresse de départ vers une adresse cible moyennant l'emploi d'une chaine de blocs (178), dans lequel une ou plusieurs adresses sont autorisées en tant qu'adresses intermédiaires pour l'exécution de transactions, lesquelles enfreignent un critère d'anonymat,
le serveur (100, 200, 230) comprenant un processeur (120, 220, 250), une mémoire (102, 202, 232) avec des instructions de programme (122, 222, 252) exécutables et une interface de communication (124, 224, 254), où une exécution des instructions de programme (122, 222, 252) par le processeur (120, 220, 250) fait en sorte que le serveur (100, 200, 230) exécute le procédé de paiement, lequel comprend :
• la réception d'une demande de transaction établie moyennant l'emploi d'un programme de portefeuille électronique (144), par le biais d'un réseau (190), moyennant l'emploi de l'interface de communication (124, 224, 254), où la demande de transaction comprend l'adresse cible et un premier ordre de transaction signé pour une première transaction du premier montant à transférer de l'adresse de départ vers une première adresse intermédiaire du serveur (100, 200, 230),
où le premier ordre de transaction est signé avec une première clé cryptographique privée (146) d'une première paire de clés asymétrique du programme de portefeuille électronique (144) associée à l'adresse de départ
où une première clé cryptographique privée (106) d'une première paire de clés asymétrique du serveur (100, 200, 230) associée à la première adresse intermédiaire est enregistrée dans une zone de mémoire protégée (104, 204, 234) de la mémoire (102, 202, 232) du serveur (100, 200, 230),
où au moins l'adresse cible est chiffrée avec une deuxième clé cryptographique publique (112) d'une deuxième paire de clés asymétrique du premier serveur (100, 200, 230),
• la vérification si la demande de transaction avec la première transaction satisfait le critère d'anonymat,
• dans le cas où la demande de transaction satisfait le critère d'anonymat, l'initiation de l'entrée du premier ordre de transaction signé dans la chaine de blocs (178),
l'initiation d'une deuxième transaction anonymisée du montant de la première adresse intermédiaire vers l'adresse cible moyennant l'emploi de la chaine de blocs (178),
• dans le cas où la demande de transaction enfreint le critère d'anonymat, la vérification si un premier enregistrement (116) pour le programme de portefeuille électronique (144) est présent sur le serveur (100, 200, 230),
dans le cas où un premier enregistrement (116) est présent, l'association du transfert de l'adresse de départ vers l'adresse cible à une première identité, laquelle est consignée sur le serveur (100, 200, 230), comprise par le premier enregistrement (116),
à la condition préalable que la première adresse intermédiaire soit autorisée pour une exécution de transactions qui enfreignent le critère d'anonymat, l'initiation de l'entrée du premier ordre de transaction signé dans la chaine de blocs (178) et l'initiation d'une troisième transaction du montant de la première adresse intermédiaire vers l'adresse cible moyennant l'emploi de la chaine de blocs (178),
dans lequel la deuxième transaction anonymisée comprend :
• le regroupement d'une multiplicité de montants à transférer de manière anonyme à des adresses cibles sur la première adresse intermédiaire,
• la division des montants à transférer individuels en respectivement une multiplicité de montants partiels, où les tailles des montants partiels dans lesquels les montants sont respectivement divisés sont choisies de manière aléatoire,
• la production d'un ordre de transaction signé pour chacun des montants partiels, où les ordres de transaction sont respectivement signés avec la première clé cryptographique privée (106) de la première paire de clés asymétrique du premier serveur (100), où des ordres de transaction comprennent respectivement une transaction du montant partiel respectif de la première adresse intermédiaire vers l'adresse cible prévue pour le montant partiel respectif,
• l'initiation décalée dans le temps d'une entrée des ordres de transaction individuels signés dans la chaine de blocs (178) dans un ordre mixte,
où l'ordre mixte est choisi de manière aléatoire et où la taille du décalage dans le temps de l'initiation de l'entrée des ordres de transaction individuels signés dans la chaine de blocs (178) est respectivement choisie de manière aléatoire.

12. Système (195) destiné à destiné à un procédé de paiement électronique permettant un transfert à anonymisation sélective d'un montant d'une crypto monnaie à partir d'une adresse de départ vers une adresse cible moyennant l'emploi d'une chaine de blocs (178), le système (195) comprenant une multiplicité de serveurs (100, 200, 230) selon la revendication 11.

13. Système (195) selon la revendication 12, lequel comprend en outre un système informatique d'utilisateur (140), dans lequel le système informatique d'utilisateur (140) comprend un processeur (154), une mémoire (142) avec des instructions de programme (156) exécutables et une interface de communication (160), dans lequel le programme de portefeuille électronique (144) est installé sur le système informatique d'utilisateur (140), dans lequel une exécution des instructions de programme (156) par le processeur (154) fait en sorte que le système informatique d'utilisateur (140) établit la demande de transaction et l'envoie, moyennant l'emploi de l'interface de communication (160), par le biais du réseau (190), à un des serveurs (100, 200, 230) du système (195).
